# EUROPEAN PATENT APPLICATION

(11) **EP 4 848 791 A1**
(43) Date of publication of application: **02.12.2026**
(21) Application number: 24919332.7
(22) Date of filing: 25.01.2024
(51) Int. Cl.: H04W 24/10

(54) **CHANNEL STATE INFORMATION REPORTING METHOD AND APPARATUS, AND CHANNEL STATE INFORMATION CONFIGURATION METHOD AND APPARATUS**

(71) Applicant: 1FINITY INC., Kawasaki-shi, Kanagawa 211-8588 (JP)
(72) Inventor: ZHANG, Jian, Beijing 100022 (CN); WANG, Guotong, Beijing 100022 (CN); LU, Yiwen, Beijing 100022 (CN); ZHAO, Di, Beijing 100022 (CN)
(74) Representative: Haseltine Lake Kempner LLP
(86) International application number: PCT/CN2024/074112
(87) International publication number: WO 2025/156223

(57) **Abstract**

Embodiments of this disclosure provide a channel state information reporting method and apparatus and a configuration method and apparatus. The method includes: receiving first configuration information by a terminal equipment; and transmitting a report according to the first configuration information, the first configuration information including at least one of the following configuration information: an event-triggered CSI resource configuration; an event-triggered CSI report configuration; an event-triggered LTM CSI resource configuration; and an event-triggered LTM CSI report configuration; an ID of the event-triggered CSI report configuration being determined in at least one of the following manners that: the event-triggered CSI report configuration and a CSI report configuration are numbered separately; the event-triggered CSI report configuration and the CSI report configuration are numbered together; the event-triggered CSI report configuration and the event-triggered LTM CSI report configuration are numbered separately; the event-triggered CSI report configuration and the event-triggered LTM CSI report configuration are numbered together; and the event-triggered CSI report configuration and an LTM CSI report configuration are numbered separately.

## Description

### Technical Field

This disclosure relates to the field of communication technologies.

### Background

5G NR supports channel state information (CSI) reporting. For example, a CSI report may include at least one of a CSI-RS resource indicator (CRI), an SSB resource indicator (SSBRI), L1-RSRP, and an L1-SINR, that is, a beam-related report is included. A terminal equipment transmits a beam report to a network device, and the network device may perform beam management accordingly, such as indicating better beams to the terminal equipment. When the terminal equipment transmits the CSI report is determined by the network device. The network device may configure a periodic CSI report, such that the terminal equipment periodically transmits the CSI report; the network device may configure a semi-persistent CSI report, and after the semi-persistent CSI report is activated by the network device, the terminal equipment periodically transmits the CSI report; and the network device may configure an aperiodic CSI report, and after the aperiodic CSI report is triggered by the network device, the terminal equipment transmits the CSI report once. The CSI report includes a measurement result for a serving cell. Supporting ICBM (inter-cell beam management) is newly added to Rel-17. In ICBM, the CSI report may include a measurement result for a non-serving cell, such that the network device may instruct the terminal equipment to use beams of the non-serving cell, but the terminal equipment is not switched to a non-serving cell.

Supporting LTM CSI reporting is newly added to Rel-18 newly. Rel-18 supports LTM (L1/L2 triggered mobility), in which a terminal equipment may transmit an LTM CSI report. The Rel-18 LTM CSI report includes SSBRI and L1-RSRP. Different from the legacy CSI report described above, the LTM CSI report includes a measurement result of a candidate cell. According to the measurement result, the network device may determine beams for the terminal equipment for use in the candidate cell, and indicate the beams to the terminal equipment before the terminal equipment is switched to the candidate cell, so that the terminal equipment is able to quickly apply a suitable beam for data transmission after switch. In other words, in LTM, the terminal equipment is switched to the candidate cell, and uses a beam of the candidate cell after switch. Similarly, the terminal equipment may transmit the LTM CSI report periodically or semi-persistently or aperiodically.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In upcoming Rel-19, further enhancements for CSI reports and LTM CSI reports will be introduced, that is, event-triggered CSI reports and event-triggered LTM CSI reports will be supported. The event-triggered CSI reports and the event-triggered LTM CSI reports respectively correspond to the legacy CSI reports and the LTM CSI reports. Unlike the legacy reports described above, for an event-triggered report, when the terminal equipment transmits the report is determined by the terminal equipment, it is triggered by an event. In other words, the terminal equipment transmits the report only when necessary, so that the report may be timely transmitted. In addition, as unnecessary reporting is avoided, reporting overhead may also be reduced. How to support the event-triggered CSI reports and the event-triggered LTM CSI reports is a problem needing to be solved. At present, Rel-19 has been established in 3GPP, and technical details relating to the event-triggered CSI reports and event-triggered LTM CSI reports have not yet been discussed.

It was found by the inventors that in order to support event-triggered reports, event-triggered report configurations and event-triggered resources need to be configured for a terminal equipment. At present, how to configure the event-triggered reports and the event-triggered resources, including a relationship between the event-triggered report configurations and the legacy report configurations and a relationship between the event-triggered resource configuration and the legacy resource configuration, is a problem needing to be solved.

In order to solve one or more of the above problems, embodiments of this disclosure provide a channel state information reporting method and apparatus and a configuration method and apparatus.

According to a first aspect of the embodiments of this disclosure, there is provided a channel state information (CSI) reporting apparatus, provided in a terminal equipment, the apparatus including:
a first receiving unit configured to receive first configuration information; and
a first transmitting unit configured to transmit a report according to the first configuration information,
the first configuration information including at least one of the following configuration information:
   an event-triggered CSI resource configuration;
   an event-triggered CSI report configuration;
   an event-triggered LTM CSI resource configuration; or
   an event-triggered LTM CSI report configuration;
   an ID of the event-triggered CSI report configuration being determined in at least one of the following manners that:
      the event-triggered CSI report configuration and a CSI report configuration are numbered separately;
      the event-triggered CSI report configuration and the CSI report configuration are numbered together;
      the event-triggered CSI report configuration and the event-triggered LTM CSI report configuration are numbered separately;
      the event-triggered CSI report configuration and the event-triggered LTM CSI report configuration are numbered together; or
      the event-triggered CSI report configuration and an LTM CSI report configuration are numbered separately.

According to a second aspect of the embodiments of this disclosure, there is provided a configuration apparatus, provided in a network device, the apparatus including:
a second transmitting unit configured to transmit first configuration information to a terminal equipment; and
a second receiving unit configured to receive a report transmitted by the terminal equipment according to the first configuration information,
the first configuration information including at least one of the following configuration information:
   an event-triggered CSI resource configuration;
   an event-triggered CSI report configuration;
   an event-triggered LTM CSI resource configuration; or
   an event-triggered LTM CSI report configuration;
   an ID of the event-triggered CSI report configuration being determined in at least one of the following manners that:
      the event-triggered CSI report configuration and a CSI report configuration are numbered separately;
      the event-triggered CSI report configuration and the CSI report configuration are numbered together;
      the event-triggered CSI report configuration and the event-triggered LTM CSI report configuration are numbered separately;
      the event-triggered CSI report configuration and the event-triggered LTM CSI report configuration are numbered together; or
      the event-triggered CSI report configuration and an LTM CSI report configuration are numbered separately.

According to a third aspect of the embodiments of this disclosure, there is provided a communication system, including a terminal equipment and/or a network device, the terminal equipment including the apparatus as described in the embodiment of the first aspect of this disclosure, and the network device including the apparatus as described in the embodiment of the second aspect of this disclosure.

According to a fourth aspect of the embodiments of this disclosure, there is provided a channel state information (CSI) reporting method, the method including:
receiving first configuration information by a terminal equipment; and
transmitting a report by the terminal equipment according to the first configuration information,
the first configuration information including at least one of the following configuration information:
   an event-triggered CSI resource configuration;
   an event-triggered CSI report configuration;
   an event-triggered LTM CSI resource configuration; or
   an event-triggered LTM CSI report configuration;
   an ID of the event-triggered CSI report configuration being determined in at least one of the following manners that:
      the event-triggered CSI report configuration and a CSI report configuration are numbered separately;
      the event-triggered CSI report configuration and the CSI report configuration are numbered together;
      the event-triggered CSI report configuration and the event-triggered LTM CSI report configuration are numbered separately;
      the event-triggered CSI report configuration and the event-triggered LTM CSI report configuration are numbered together; or
      the event-triggered CSI report configuration and an LTM CSI report configuration are numbered separately.

According to a fifth aspect of the embodiments of this disclosure, there is provided a configuration method, the method including:
transmitting first configuration information by a network device to a terminal equipment; and
receiving, by the network device, a report transmitted by the terminal equipment according to the first configuration information,
the first configuration information including at least one of the following configuration information:
   an event-triggered CSI resource configuration;
   an event-triggered CSI report configuration;
   an event-triggered LTM CSI resource configuration; or
   an event-triggered LTM CSI report configuration;
   an ID of the event-triggered CSI report configuration being determined in at least one of the following manners that:
      the event-triggered CSI report configuration and a CSI report configuration are numbered separately;
      the event-triggered CSI report configuration and the CSI report configuration are numbered together;
      the event-triggered CSI report configuration and the event-triggered LTM CSI report configuration are numbered separately;
      the event-triggered CSI report configuration and the event-triggered LTM CSI report configuration are numbered together; or
      the event-triggered CSI report configuration and an LTM CSI report configuration are numbered separately.

According to a sixth aspect of the embodiments of this disclosure, there is provided a computer readable program, which, when executed in a channel state information reporting apparatus or a terminal equipment, will cause the channel state information reporting apparatus or the terminal equipment to carry out the channel state information reporting method as described in the embodiment of the fourth aspect of this disclosure.

According to a seventh aspect of the embodiments of this disclosure, there is provided a computer readable program, which, when executed in a channel state information reporting apparatus or a network device, will cause the channel state information reporting apparatus or the network device to carry out the channel state information reporting method as described in the embodiment of the fifth aspect of this disclosure.

According to an eighth aspect of the embodiments of this disclosure, there is provided a computer readable medium, including a computer readable program, which will cause a channel state information reporting apparatus or a terminal equipment to carry out the channel state information reporting method as described in the embodiment of the fourth aspect of this disclosure.

According to a ninth aspect of the embodiments of this disclosure, there is provided a computer readable medium, including a computer readable program, which will cause a channel state information reporting apparatus or a network device to carry out the channel state information reporting method as described in the embodiment of the fifth aspect of this disclosure.

An advantage of the embodiments of this disclosure exists in that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is schematic diagram of a communication system of an embodiment of this disclosure;
FIG. 2 is a schematic diagram of a channel state information reporting method of an embodiment of this disclosure;
FIG. 3 is a schematic diagram of a first implementation of a report configuration and a resource configuration of the embodiments of this disclosure;
FIG. 4 is a schematic diagram of a second implementation of the report configuration and the resource configuration of the embodiments of this disclosure;
FIG. 5 is a schematic diagram of a third implementation of the report configuration and the resource configuration of the embodiments of this disclosure;
FIG. 6 is a schematic diagram of a fourth implementation of the report configuration and the resource configuration of the embodiments of this disclosure;
FIG. 7 is a schematic diagram of a fifth implementation of the report configuration and the resource configuration of the embodiments of this disclosure;
FIG. 8 is a schematic diagram of a sixth implementation of the report configuration and the resource configuration of the embodiments of this disclosure;
FIG. 9 is a schematic diagram of a seventh implementation of the report configuration and the resource configuration of the embodiments of this disclosure;
FIG. 10 is a schematic diagram of an eighth implementation of the report configuration and the resource configuration of the embodiments of this disclosure;
FIG. 11 is a schematic diagram of a ninth implementation of the report configuration and the resource configuration of the embodiments of this disclosure;
FIG. 12 is a schematic diagram of a tenth implementation of the report configuration and the resource configuration of the embodiments of this disclosure;
FIG. 13 is a schematic diagram of a configuration method of an embodiment of this disclosure;
FIG. 14 is an interaction graph of the channel state information reporting method of the embodiments of this disclosure;
FIG. 15 is a schematic diagram of a channel state information reporting apparatus of an embodiment of this disclosure;
FIG. 16 is a schematic diagram of a configuration apparatus of an embodiment of this disclosure;
FIG. 17 is a block diagram of a systematic structure of a terminal equipment of an embodiment of this disclosure; and
FIG. 18 is a block diagram of a systematic structure of a network device of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and NEW Radio (NR) in the future, etc., and/or other communication protocols that are currently known or will be developed in the future.

In the embodiments of this disclosure, the term "network device" or "network node", for example, refers to a device in a communication system that accesses a user equipment to the communication network and provides services for the user equipment. The network device or network node may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the gNB DU is a logical node of the gNB having a part of functions of the gNB. And a term "cell" may refer to a base station and/or its coverage area, depending on a context of the term. One gNB-DU supports one or more cells, and one cell is supported by one gNB-DU only.

In the embodiments of this disclosure, the term "user equipment (UE)" refers to, for example, an equipment accessing to a communication network and receiving network services via a network device, may also be referred to as "terminal equipment (TE)". The terminal equipment may be fixed or mobile, and may also be referred to as a mobile station (MS), a terminal, a subscriber station (SS), an access terminal (AT), such as a terminal equipment supported by an IAB-node or IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if" all indicate being based on one or more conditions or states, and in addition, these expressions are interchangeable.

Scenarios of the embodiments of this disclosure shall be described below by way of examples; however, this disclosure is not limited thereto.

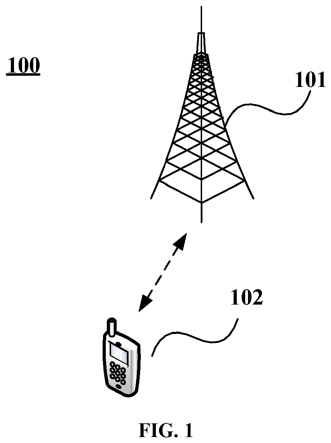

FIG. 1 is a schematic diagram of a communication system of an embodiment of this disclosure, in which a case where a terminal equipment and a network device are taken as examples is schematically shown. As shown in FIG. 1, a communication system 100 may include a network device 101 and a terminal equipment 102. For the sake of simplicity, an example having only one terminal equipment and one network device is schematically given in FIG. 1; however, the embodiments of this disclosure is not limited thereto.

In the embodiments of this disclosure, existing services or services that may be implemented in the future may be performed between the network device 101 and the terminal equipment 102. For example, such services may include but not limited to an enhanced mobile broadband (eMBB), massive machine type communication (mMTC), and ultra-reliable and low-latency communication (URLLC), etc.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). high layer signaling may also be, for example, medium access control (MAC) signaling, or an MAC control element (MAC CE); however, this disclosure is not limited thereto.

Implementations of the embodiments of this disclosure shall be described below with reference to the accompanying drawings; however, these implementations are illustrative only, and are not intended to limit this disclosure.

### Embodiment of a first aspect

The embodiments of this disclosure provide a channel state information reporting method, applicable to a terminal equipment, such as the terminal equipment 102 in FIG. 1.

In the embodiments of this disclosure, a report used for reporting CSI may include different types of reports, which may be collectively referred to as a report. For example, the report includes at least one of a CSI report, an LTM CSI report, an event-triggered CSI report, and an event-triggered LTM CSI report.

Similarly, different types of report configurations may be collectively referred to as report configurations, different types of resource configurations may be collectively referred to as resource configurations, and different types of resources may be collectively referred to as resources.

For example, a report configuration includes at least one of a CSI report configuration, an LTM CSI report configuration, an event-triggered CSI report configuration, and an event-triggered LTM CSI report configuration.

For example, a resource configuration includes at least one of a CSI resource configuration, an LTM CSI resource configuration, an event-triggered CSI resource configuration, and an event-triggered LTM CSI resource configuration.

For example, a resource includes at least one of a CSI resource, an LTM CSI resource, an event-triggered CSI resource, and an event-triggered LTM CSI resource.

In the embodiments of this disclosure, "an event-triggered report" is "a report that is triggered by an event".

In the embodiments of this disclosure, "event-triggered" may be replaced with "UE-initiated" or "event-driven."

In the embodiments of this disclosure, a terminal equipment transmits a report according to a report configuration, the report configuration being associated with a resource configuration, and the terminal equipment measures a resource according to the resource configuration, and includes a measurement result of the resource in a transmitted report.

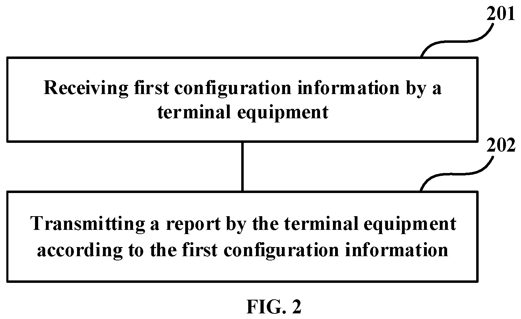

FIG. 2 is a schematic diagram of the channel state information reporting method of the embodiments of this disclosure. As shown in FIG. 2, the method includes:
201: receiving first configuration information by a terminal equipment; and
202: transmitting a report by the terminal equipment according to the first configuration information.

In some embodiments, the first configuration information is configuration information related to CSI reporting.

In some embodiments, the first configuration information includes at least one of the following configuration information:
an event-triggered CSI resource configuration;
an event-triggered CSI report configuration;
an event-triggered LTM CSI resource configuration; or
an event-triggered LTM CSI report configuration.

That is, the first configuration information includes an event-triggered report configuration and/or resource configuration.

In some embodiments, the first configuration information may further include at least one of the following configuration information:
a CSI resource configuration;
a CSI report configuration;
an LTM CSI resource configuration; or
an LTM CSI report configuration.

That is, the first configuration information may further include a legacy report configuration and/or resource configuration.

In the embodiments of this disclosure, a group of event-triggered report configurations may be configured as a subset of a group of legacy report configurations or may be configured separately from a group of legacy report configurations. For example, whether the event-triggered report configurations are configured as a subset of legacy report configurations or are configured separately from the legacy report configurations is distinguished by whether the event-triggered report configurations and the legacy report configurations are numbered together or separately.

In some embodiments, an identifier (ID) of a report configuration is also referred to as an identification of a report configuration.

In some embodiments, an ID of the event-triggered CSI report configuration is determined in at least one of the following manners that:
the event-triggered CSI report configuration and a CSI report configuration are numbered separately;
the event-triggered CSI report configuration and the CSI report configuration are numbered together;
the event-triggered CSI report configuration and the event-triggered LTM CSI report configuration are numbered separately;
the event-triggered CSI report configuration and the event-triggered LTM CSI report configuration are numbered together; and
the event-triggered CSI report configuration and an LTM CSI report configuration are numbered separately.

In some embodiments, an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

In the embodiments of this disclosure, a group of event-triggered resource configurations may be configured as a subset of a group of legacy resource configurations or may be configured separately from a group of legacy resource configurations. For example, whether the event-triggered resource configurations are configured as a subset of legacy resource configurations or are configured separately from the legacy resource configurations is distinguished by whether the event-triggered resource configurations and the legacy resource configurations are numbered together or separately.

In some embodiments, an ID of a resource configuration is also referred to as an identification of a resource configuration.

In some embodiments, an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

In some embodiments, an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

In addition, it should be noted that the manner (numbering rule) for determining the numbering of the event-triggered report configuration and/or the event-triggered resource configuration is not dependent on whether the first configuration information includes a legacy report configuration and/or resource configuration, that is, the manner for determining the numbering of the event-triggered report configuration and/or the event-triggered resource configuration is not dependent on actual configurations of the terminal equipment, for example, the RRC IE itself is in conformity with the above manner for determining numbering.

The above numbering rule for the event-triggered report configuration and/or the event-triggered resource configuration shall be specifically described below by way of examples; however, these examples are not intended to limit this disclosure.

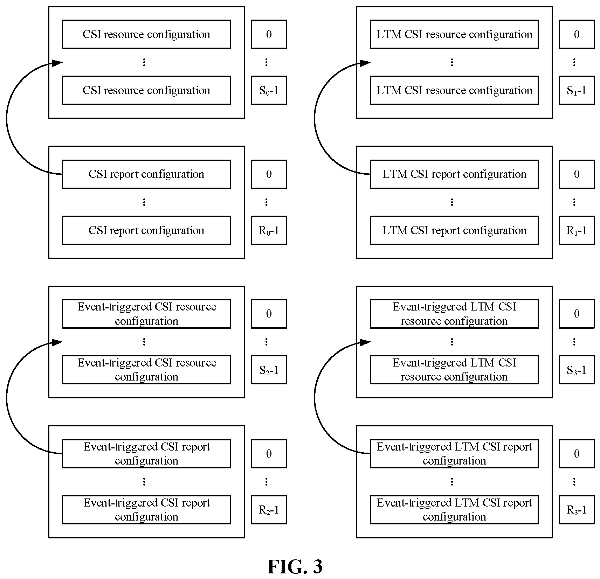

FIG. 3 is a schematic diagram of a first implementation of the report configuration and the resource configuration of the embodiments of this disclosure.

For example, as shown in FIG. 3, the ID of the report configuration number and the ID of the resource configuration are determined according to that,
the event-triggered CSI report configuration and the CSI report configuration are numbered separately,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered separately,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered separately, and
the event-triggered LTM CSI resource configuration and the CSI resource configuration are numbered separately.

For example, as shown in FIG. 3, the terminal equipment is configured with at least one of the following, that is, the first configuration information may include at least one of the following:
S0 CSI resource configurations (with IDs from 0 to S0-1),
R0 CSI report configurations (with IDs from 0 to R0-1),
S1 LTM CSI resource configurations (with IDs from 0 to S1-1),
R1 LTM CSI report configurations (with IDs from 0 to R1-1),
S2 event-triggered CSI resource configurations (with IDs from 0 to S2-1),
R2 event-triggered CSI report configurations (IDs from 0 to R2-1),
S3 event-triggered LTM CSI resource configurations (with IDs from 0 to S3-1),
R3 event-triggered LTM CSI report configuration (with IDs from 0 to R3-1).

In this embodiment, different types of report configurations and resource configurations are configured separately, thereby providing maximum configuration flexibility.

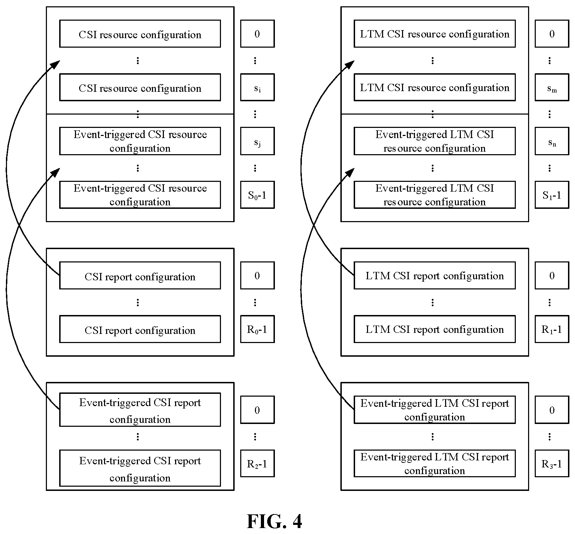

FIG. 4 is a schematic diagram of a second implementation of the report configuration and the resource configuration of the embodiments of this disclosure.

For example, as shown in FIG. 4, the ID of the report configuration and the ID of the resource configuration are determined according to the following that:
the event-triggered CSI report configuration and the CSI report configuration are numbered separately,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered together,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered together, and
the event-triggered LTM CSI resource configuration and the CSI resource configuration are numbered separately.

As shown in FIG. 4, the terminal equipment is configured with at least one of the following, that is, the first configuration information may include at least one of the following:
S0 resource configurations including CSI resource configurations and/or event-triggered CSI resource configurations,
R0 CSI report configurations,
S1 resource configurations including LTM CSI resource configurations and/or event-triggered LTM CSI resource configurations,
R1 LTM CSI report configurations,
R2 event-triggered CSI report configurations, or
R3 an event-triggered LTM CSI report configurations,

In this implementation, by uniformly numbering the event-triggered resource configuration and the legacy resource configuration, a maximum number of existing resource configurations need not to be increased, that is, some resource configurations originally reserved for use by legacy resources are used for event-triggered resources, thereby facilitating reduction of implementation complexity of devices. In other words, a group of event-triggered resource configurations may be configured as a subset of a group of legacy resource configurations.

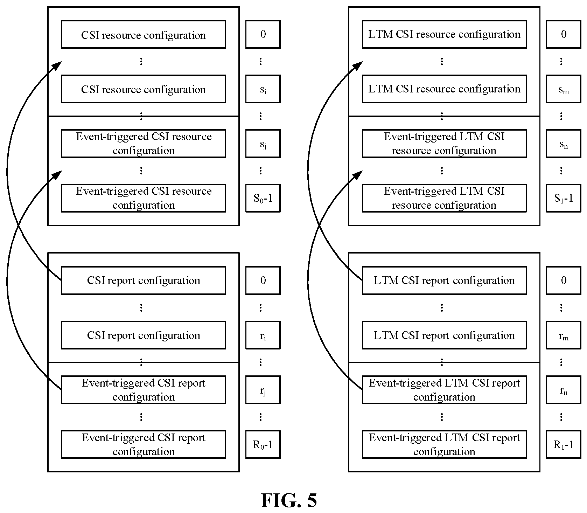

FIG. 5 is a schematic diagram of a third implementation of the report configuration and the resource configuration of the embodiments of this disclosure.

For example, as shown in FIG. 5, the ID of the report configuration and the ID of the resource configuration are determined according to the following that:
the event-triggered CSI report configuration and the CSI report configuration are numbered together,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered together,
the event-triggered LTM CSI report configuration and the CSI report configuration are numbered separately,
the event-triggered CSI resource configuration and the CSI resource configuration are numbered together,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered together, and
the event-triggered LTM CSI resource configuration and the CSI resource configuration are numbered separately.

For example, as shown in FIG. 5, the terminal equipment is configured with at least one of the following, that is, the first configuration information may include at least one of the following:
S0 resource configurations including a CSI resource configuration and/or an event-triggered CSI resource configuration,
R0 report configuration including a CSI report configuration and/or an event-triggered CSI report configuration,
S1 resource configuration including an LTM CSI resource configuration and/or an event-triggered LTM CSI resource configuration, and
R1 report configurations including an LTM CSI report configuration and/or an event-triggered LTM CSI report configuration.

In this implementation, by uniformly numbering the event-triggered resource configuration and the legacy resource configuration, a maximum number of existing resource configurations need not to be increased, that is, some resource configurations originally reserved for use by legacy resources are used for event-triggered resources, thereby facilitating reduction of implementation complexity of devices. In other words, a group of event-triggered resource configurations may be configured as a subset of a group of legacy resource configurations.

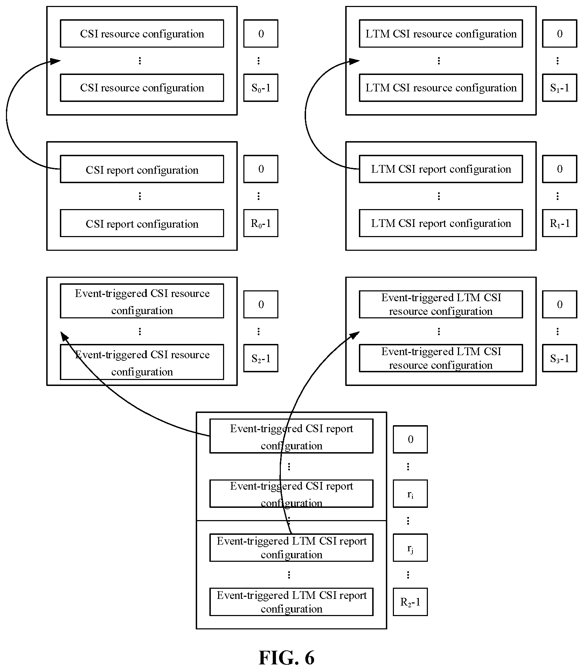

FIG. 6 is a schematic diagram of a fourth implementation of the report configuration and the resource configuration of the embodiments of this disclosure.

For example, as shown in FIG. 6, the ID of the report configuration and the ID of the resource configuration are determined according to the following that:
the event-triggered CSI report configuration and the CSI report configuration are numbered separately,
the event-triggered CSI report configuration and the event-triggered LTM CSI report configuration are numbered together,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered separately,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered separately, and
the event-triggered LTM CSI resource configuration and the CSI resource configuration are numbered separately.

For example, as shown in FIG. 6, the terminal equipment is configured with at least one of the following, that is, the first configuration information may include at least one of the following:
S0 CSI resource configurations,
R0 CSI report configurations,
S1 LTM CSI resource configurations,
R1 LTM CSI report configurations,
S2 event-triggered CSI resource configurations,
S3 event-triggered LTM CSI resource configurations, or
R2 report configurations including an event-triggered CSI report configuration and/or an event-triggered LTM CSI report configuration.

In this implementation, by uniformly numbering the event-triggered resource configuration and the event-triggered LTM CSI report configuration, a maximum number of a total number thereof may be limited, thereby facilitating reduction of implementation complexity of devices.

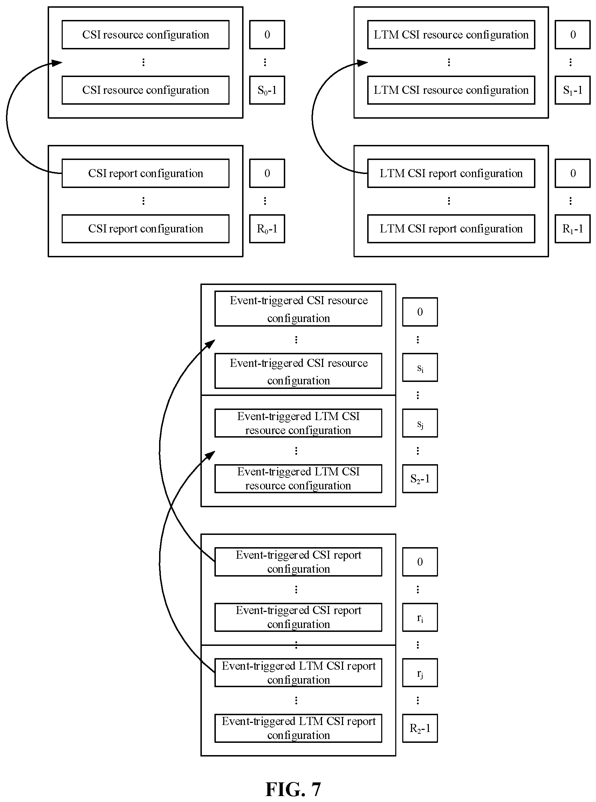

FIG. 7 is a schematic diagram of a fifth implementation of the report configuration and the resource configuration of the embodiments of this disclosure.

For example, as shown in FIG. 7, the ID of the report configuration and the ID of the resource configuration are determined according to the following that:
the event-triggered CSI report configuration and the CSI report configuration are numbered separately,
the event-triggered CSI report configuration and the event-triggered LTM CSI report configuration are numbered together,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered separately,
the event-triggered CSI resource configuration and the event-triggered LTM CSI resource configuration are numbered together,
the event-triggered CSI resource configuration and the LTM CSI resource configuration are numbered separately,
the event-triggered LTM CSI resource configuration and the LTM CSI resource configuration are numbered separately, and
the event-triggered LTM CSI resource configuration and the CSI resource configuration are numbered separately.

For example, as shown in FIG. 7, the terminal equipment is configured with at least one of the following, that is, the first configuration information may include at least one of the following:
S0 CSI resource configurations,
R0 CSI report configurations,
S1 LTM CSI resource configurations,
R1 LTM CSI report configurations,
S2 resource configurations including an event-triggered CSI resource configuration and/or an event-triggered LTM CSI resource configuration, and
R2 report configurations including an event-triggered CSI report configuration and/or an event-triggered LTM CSI report configuration.

In this implementation, by uniformly numbering the event-triggered CSI resource configuration and the event-triggered LTM CSI resource configuration, a maximum number of a total number thereof may be limited, thereby facilitating reduction of implementation complexity of devices.

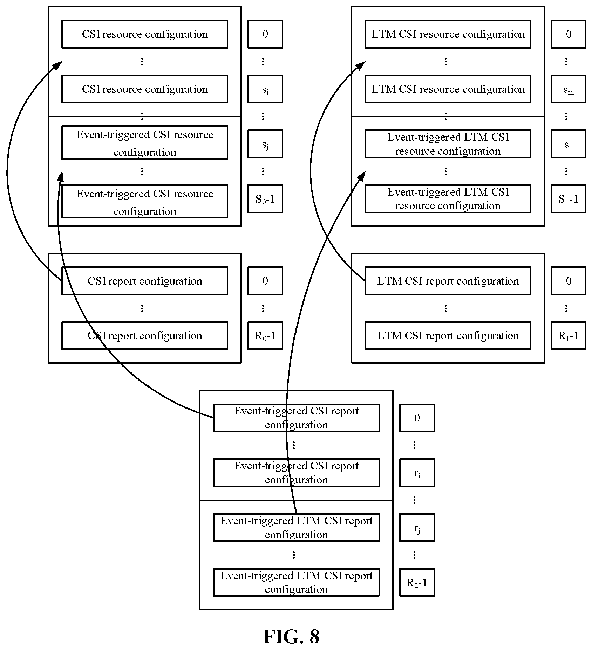

FIG. 8 is a schematic diagram of a sixth implementation of the report configuration and the resource configuration of the embodiments of this disclosure.

For example, as shown in FIG. 8, the ID of the report configuration and the ID of the resource configuration are determined according to the following that:
the event-triggered CSI report configuration and the CSI report configuration are numbered separately,
the event-triggered CSI report configuration and the event-triggered LTM CSI report configuration are numbered together,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered together,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered together, and
the event-triggered LTM CSI resource configuration and the CSI resource configuration are numbered separately.

For example, as shown in FIG. 8, the terminal equipment is configured with at least one of the following, that is, the first configuration information may include at least one of the following:
S0 resource configurations including a CSI resource configuration and/or an event-triggered CSI resource configuration,
S1 resource configurations including an LTM CSI resource configuration and/or an event-triggered LTM CSI resource configuration,
R0 CSI report configurations,
R1 LTM CSI report configurations, or
R2 report configurations including an event-triggered CSI report configuration and/or an event-triggered LTM CSI report configuration.

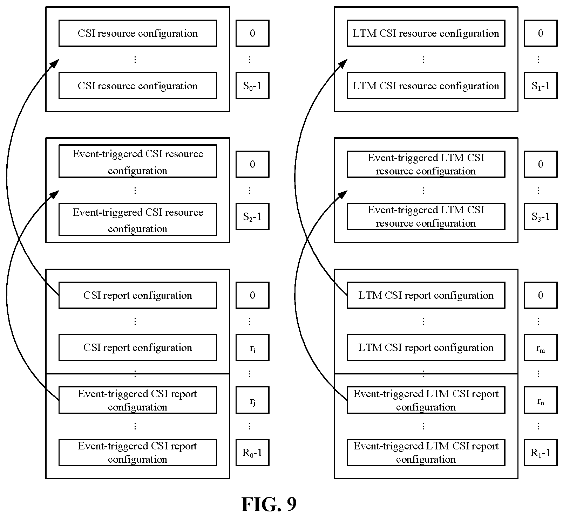

FIG. 9 is a schematic diagram of a seventh implementation of the report configuration and the resource configuration of the embodiments of this disclosure.

For example, as shown in FIG. 9, the ID of the report configuration and the ID of the resource configuration are determined according to the following that:
the event-triggered CSI report configuration and the CSI report configuration are numbered together,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered together,
the event-triggered LTM CSI report configuration and the CSI report configuration are numbered separately,
the event-triggered CSI resource configuration and the CSI resource configuration are numbered separately,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered separately, and
the event-triggered LTM CSI resource configuration and the CSI resource configuration are numbered separately.

For example, as shown in FIG. 9, the terminal equipment is configured with at least one of the following, that is, the first configuration information may include at least one of the following:
S0 CSI resource configurations,
S1 LTM CSI resource configurations,
S2 event-triggered CSI resource configurations,
S3 event-triggered LTM CSI resource configurations,
R0 report configurations including a CSI report configuration and/or and event-triggered CSI report configuration, or
R1 report configurations including an LTM CSI report configuration and/or an event-triggered LTM CSI report configuration.

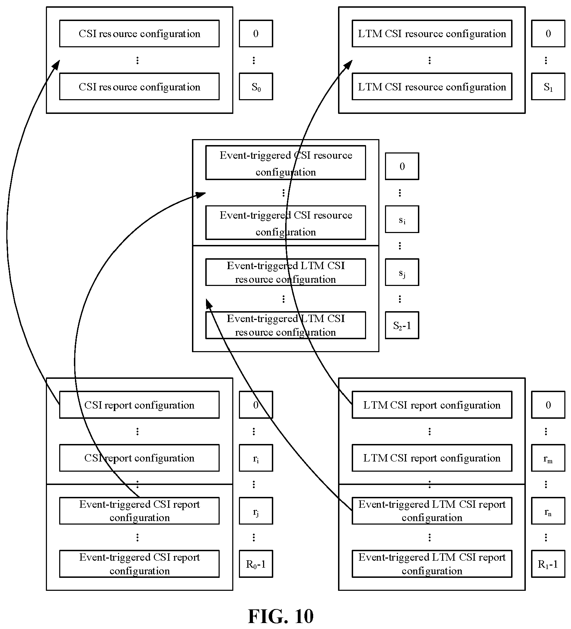

FIG. 10 is a schematic diagram of an eighth implementation of the report configuration and the resource configuration of the embodiments of this disclosure.

For example, as shown in FIG. 10, the ID of the report configuration and the ID of the resource configuration are determined according to the following that:
the event-triggered CSI report configuration and the CSI report configuration are numbered together,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered together,
the event-triggered LTM CSI report configuration and the CSI report configuration are numbered separately,
the event-triggered CSI resource configuration and the CSI resource configuration are numbered separately,
the event-triggered CSI resource configuration and the event-triggered LTM CSI resource configuration are numbered together,
the event-triggered CSI resource configuration and the LTM CSI resource configuration are numbered separately,
the event-triggered LTM CSI resource configuration and the LTM CSI resource configuration are numbered separately, and
the event-triggered LTM CSI resource configuration and the CSI resource configuration are numbered separately.

For example, as shown in FIG. 10, the terminal equipment is configured with at least one of the following, that is, the first configuration information may include at least one of the following:
S0 CSI resource configurations,
S1 LTM CSI resource configurations,
S2 resource configurations including an event-triggered CSI resource configuration and/or an event-triggered LTM CSI resource configuration,
R0 report configurations including a CSI report configuration and/or an event-triggered CSI report configuration, or
R1 report configurations including an LTM CSI report configuration and/or an event-triggered LTM CSI report configuration.

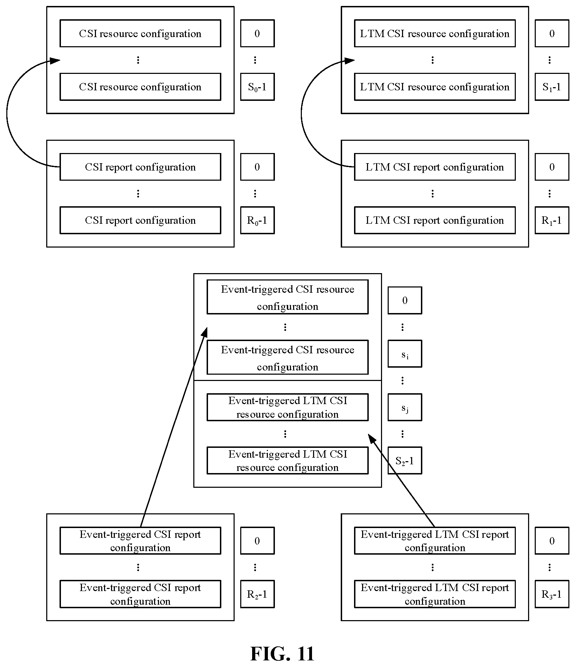

FIG. 11 is a schematic diagram of a ninth implementation of the report configuration and the resource configuration of the embodiments of this disclosure.

For example, as shown in FIG. 11, the ID of the report configuration and the ID of the resource configuration are determined according to the following that:
the event-triggered CSI report configuration and the CSI report configuration are numbered separately,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered separately,
the event-triggered CSI resource configuration and the event-triggered LTM CSI resource configuration are numbered together,
the event-triggered CSI resource configuration and the LTM CSI resource configuration are numbered separately,
the event-triggered LTM CSI resource configuration and the LTM CSI resource configuration are numbered separately,
the event-triggered LTM CSI resource configuration and the CSI resource configuration are numbered separately.

For example, as shown in FIG. 11, the terminal equipment is configured with at least one of the following, that is, the first configuration information may include at least one of the following:
S0 CSI resource configurations,
S1 LTM CSI resource configurations,
R0 CSI report configurations,
R1 LTM CSI report configurations,
S2 resource configurations including an event-triggered CSI resource configuration and/or an event-triggered LTM CSI resource configuration,
R2 event-triggered CSI report configurations, or
R3 event-triggered LTM CSI report configurations.

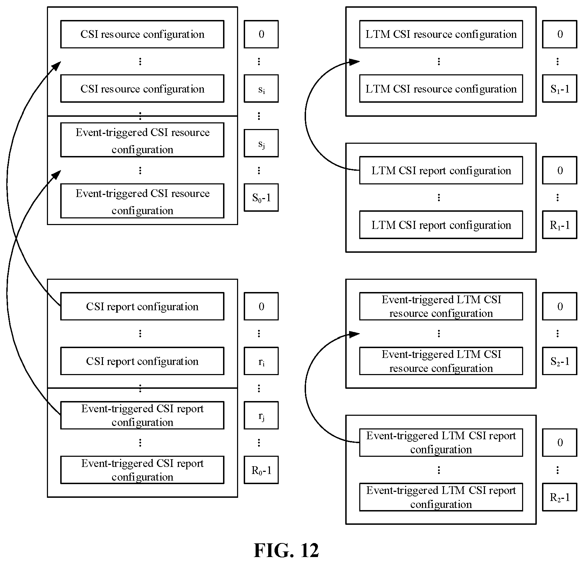

FIG. 12 is a schematic diagram of a tenth implementation of the report configuration and the resource configuration of the embodiments of this disclosure.

For example, as shown in FIG. 12, the ID of the report configuration and the ID of the resource configuration are determined according to the following that:
the event-triggered CSI report configuration and the CSI report configuration are numbered together,
the event-triggered CSI report configuration and the event-triggered LTM CSI report configuration are numbered separately,
the event-triggered CSI report configuration and the LTM CSI report configuration are numbered separately,
the event-triggered LTM CSI report configuration and the LTM CSI report configuration are numbered separately,
the event-triggered LTM CSI report configuration and the CSI report configuration are numbered separately,
the event-triggered CSI resource configuration and the CSI resource configuration are numbered together,
the event-triggered CSI resource configuration and the event-triggered LTM CSI resource configuration are numbered separately,
the event-triggered CSI resource configuration and the LTM CSI resource configuration are numbered separately,
the event-triggered LTM CSI resource configuration and the LTM CSI resource configuration are numbered separately, and
the event-triggered LTM CSI resource configuration and the CSI resource configuration are numbered separately.

For example, as shown in FIG. 12, the terminal equipment is configured with at least one of the following, that is, the first configuration information may include at least one of the following:
S0 resource configurations including a CSI resource configuration and/or an event-triggered CSI resource configuration,
R0 report configurations including a CSI report configuration and/or an event-triggered CSI report configuration,
S1 LTM CSI resource configurations,
R1 LTM CSI report configurations,
S2 event-triggered LTM CSI resource configurations, or
R2 event-triggered LTM CSI report configurations.

Whether the event-triggered report configuration and the legacy report configuration are numbered together or numbered separately and/or whether the event-triggered resource configuration and the legacy resource configuration are numbered together or numbered separately are described above.

In some embodiments, a numbering together includes configuring via an identical RRC IE, and a numbering separately includes configuring via different RRC IEs.

For example, that "the event-triggered CSI resource configuration and the CSI resource configuration are numbered together" also indicates that "the event-triggered CSI resource configuration and the CSI resource configuration are configured via an identical RRC IE".

Following is an example (Example1) of an RRC IE csi-ResourceConfigToAddModList:

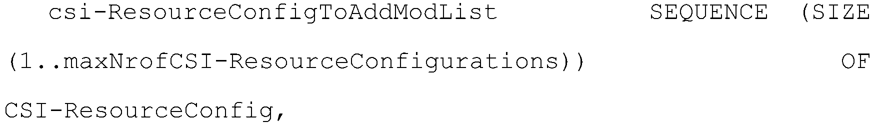

For example, as shown in Example 1, one or more CSI-ResourceConfig configured by the same RRC IE csi-ResourceConfigToAddModList are numbered together, wherein some CSI-ResourceConfig belong to the event-triggered CSI resource configuration, and some CSI-ResourceConfig belong to the CSI resource configuration. In other words, the event-triggered CSI resource configuration and the CSI resource configuration are configured by CSI-ResourceConfig, or are configured by csi-ResourceConfigToAddModList. Therefore, the event-triggered CSI resource configuration and the CSI resource configuration are configured by the same RRC IE, the same RRC IE refering to CSI-ResourceConfig or csi-ResourceConfigToAddModList.

For example, that "the event-triggered CSI resource configuration and the CSI resource configuration are numbered together" may be replaced with that "the event-triggered CSI resource configuration and the CSI resource configuration are configured by the same RRC IE". For example, that "the event-triggered CSI resource configuration and the CSI resource configuration are numbered together" may be replaced with that "the event-triggered CSI resource configuration and the CSI resource configuration are numbered together, and the event-triggered CSI resource configuration and the CSI resource configuration are configured by the same RRC IE". For example, that "the event-triggered CSI resource configuration and the CSI resource configuration are numbered separately" also indicates that "the event-triggered CSI resource configuration and the CSI resource configuration are configured by different RRC IEs".

Following is another example (Example 2) of the RRC IE csi-ResourceConfigToAddModList:

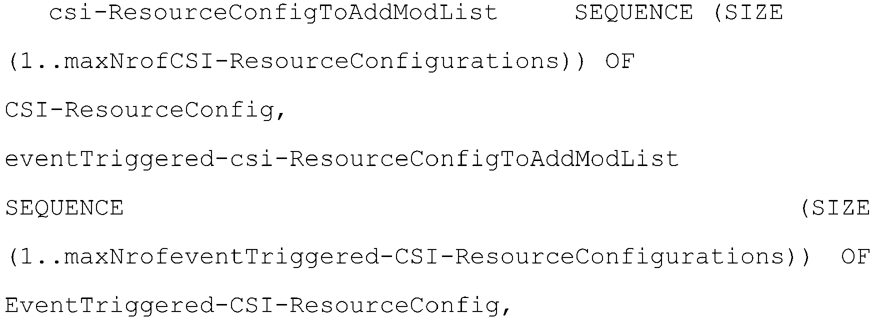

For example, as shown in Example2, one or more CSI-ResourceConfig configured by the RRC IE csi-ResourceConfigToAddModList are numbered together and belong to the CSI resource configuration, and one or more EventTriggered-CSI-ResourceConfig configured by an RRC IE eventTriggered-csi-ResourceConfigToAddModList are numbered together and belong to the event-triggered CSI resource configuration. Therefore, the event-triggered CSI resource configuration and the CSI resource configuration are configured by different RRC IEs, the different RRC IEs referring to CSI-ResourceConfig and EventTriggered-CSI-ResourceConfig, or, referring to csi-ResourceConfigToAddModList and eventTriggered-csi-ResourceConfigToAddModList.

For example, that "the event-triggered CSI resource configuration and the CSI resource configuration are numbered separately" may be replaced with that "the event-triggered CSI resource configuration and the CSI resource configuration are configured by different RRC IEs".

For example, that "the event-triggered CSI resource configuration and the CSI resource configuration are numbered separately" may be replaced with that "the event-triggered CSI resource configuration and the CSI resource configuration are numbered separately, and the event-triggered CSI resource configuration and the CSI resource configuration are configured by different RRC IEs".

The above description is given by taking the event-triggered CSI resource configuration and the CSI resource configuration as examples. The event-triggered CSI resource configuration and the CSI resource configuration are logical concepts, and may be configured by the same RRC IE or may be configured by different RRC IEs. Other resource configurations and report configurations may be obtained through inference in the same manner, and shall not enumerated herein any further.

In some embodiments, the event-triggered CSI report configuration and the event-triggered CSI resource configuration are associated, and/or the event-triggered LTM CSI report configuration and the event-triggered LTM CSI resource configuration are associated.

For example, associations between the report configuration and the resource configuration are illustrated in FIG. 3 to FIG. 12. For a type of report configuration, it is associated with one or more resource configurations of the same type. For example, a resource configuration associated with an event-triggered CSI report configuration is referred to as an event-triggered CSI resource configuration, and a report configuration associated with the event-triggered CSI resource configuration is referred to as an event-triggered CSI report configuration, and so on.

In some embodiments, numbering of an event-triggered CSI report configuration and an event-triggered CSI report configuration is associated with numbering of one or more event-triggered CSI resource configurations, and/or numbering of an event-triggered LTM CSI report configuration and an event-triggered LTM CSI report configuration is associated with numbering of one or more event-triggered LTM CSI resource configuration.

For example, following is an example (Example3) of the association between the report configuration and the resource configuration:

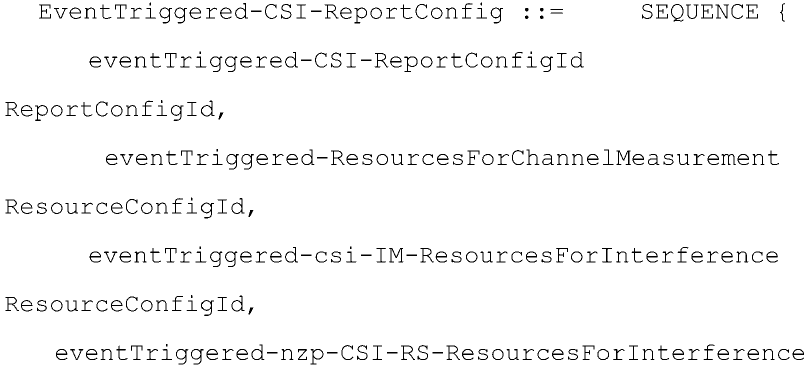

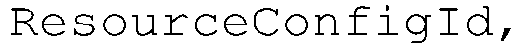

For example, as shown in Example 3, an event-triggered CSI report configuration (EventTriggered-CSI-ResourceConfig) is associated with a report configuration ID (ReportConfigId), and is associated with one or more resource configuration IDs (ResourceConfigId). In other words, an event-triggered CSI report configuration has a report configuration ID, and is associated with one or more event-triggered CSI resource configurations via one or more resource configuration IDs. The one or more event-triggered CSI resource configurations include at least one of eventTriggered-ResourcesForChannelMeasurement (a resource configured for use in channel measurement), eventTriggered-csi-IM-ResourcesForInterference (a resource configured for use in interference measurement) and eventTriggered-nzp-CSI-RS-ResourcesForInterference (an NZP CSI-RS resource configured for use in interference measurement). Other resource configurations and report configurations may be obtained through inference in the same manner, and shall not enumerated herein any further.

In some embodiments, the type of the resource configuration is determined according to the type of the report configuration with which the resource configuration is associated, and/or the type of the report configuration is determined according to the type of the resource configuration with which the report configuration is associated. The type of the report configuration includes at least one of an event-triggered CSI report configuration, an event-triggered LTM CSI report configuration, a CSI report configuration and an LTM CSI report configuration, and the type of the resource configuration includes at least one of a event-triggered CSI resource configuration, an event-triggered LTM CSI resource configuration, a CSI resource configuration and an LTM CSI resource configuration.

For example, as shown in the left of FIG. 4, the event-triggered CSI report configuration and the CSI report configuration are numbered separately, and the event-triggered CSI resource configuration and the CSI resource configuration are uniformly numbered. Following is an example (Example 4) of a structure of corresponding RRC signaling (RRC IE):

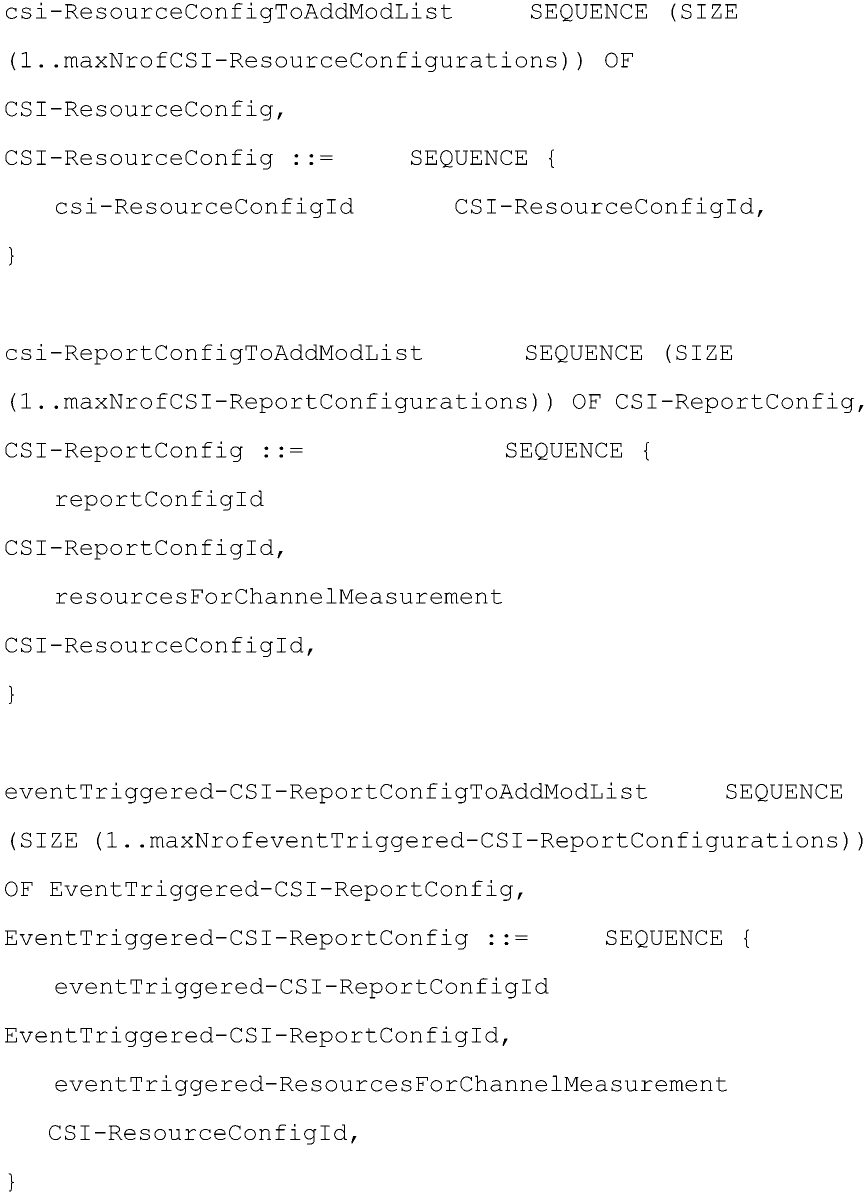

For example, as shown in Example 4, the event-triggered CSI report configuration (EventTriggered-CSI-ReportConfig) and the CSI report configuration (CSI-ReportConfig) are provided by different RRC IEs, and both the event-triggered CSI report configuration and the CSI report configuration are associated with CSI-ResourceConfig via CSI-ResourceConfigId. The type of the resource configuration is determined according to a type of a report configuration associated therewith. More specifically, CSI-ResourceConfig with which the event-triggered CSI report configuration is associated is an event-triggered CSI resource configuration, and CSI-ResourceConfig with which the CSI report configuration is associated is a CSI resource configuration. Although the resource configurations are provided via CSI-ResourceConfig (i.e. configured via an identical RRC IE), as types of report configurations associated therewith are distinguishable, which CSI-ResourceConfig belongs to the event-triggered CSI resource configuration and which CSI-ResourceConfig belongs to the CSI resource configuration may be distinguished accordingly (i.e. the types of the resource configurations are distinguished). The event-triggered CSI resource configuration and the CSI resource configuration are logical concepts, a resource configuration associated with the event-triggered CSI resource configuration is referred to as an event-triggered CSI resource configuration, and a resource configuration associated with the CSI report configuration is referred to as a CSI resource configuration.

Similarly, as shown in the right of FIG. 4, the event-triggered LTM CSI report configuration and the LTM CSI report configuration are numbered separately, and the event-triggered LTM CSI resource configuration and the LTM CSI resource configuration are uniformly numbered.

Following is an example (Example 5) of a structure of corresponding RRC signaling (RRC IE):

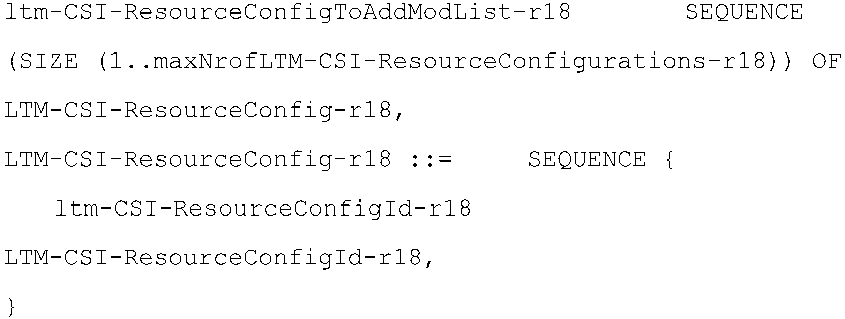

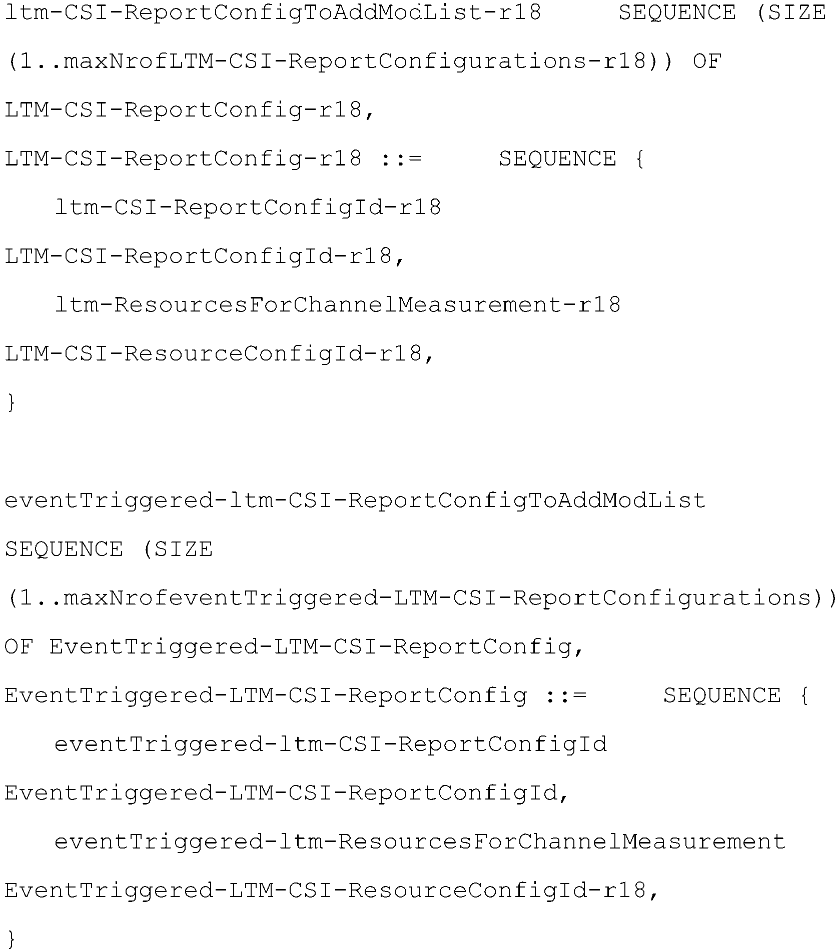

For example, as shown in FIG. 8, the event-triggered CSI report configuration and the event-triggered LTM CSI report configuration are numbered together, the event-triggered CSI resource configuration and the CSI resource configuration are numbered together, and the event-triggered LTM CSI resource configuration and the LTM CSI resource configuration are numbered together.

Following is an example (Example 6) of a structure of corresponding RRC signaling (RRC IE):

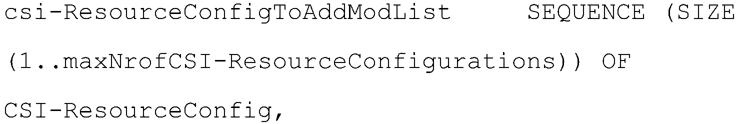

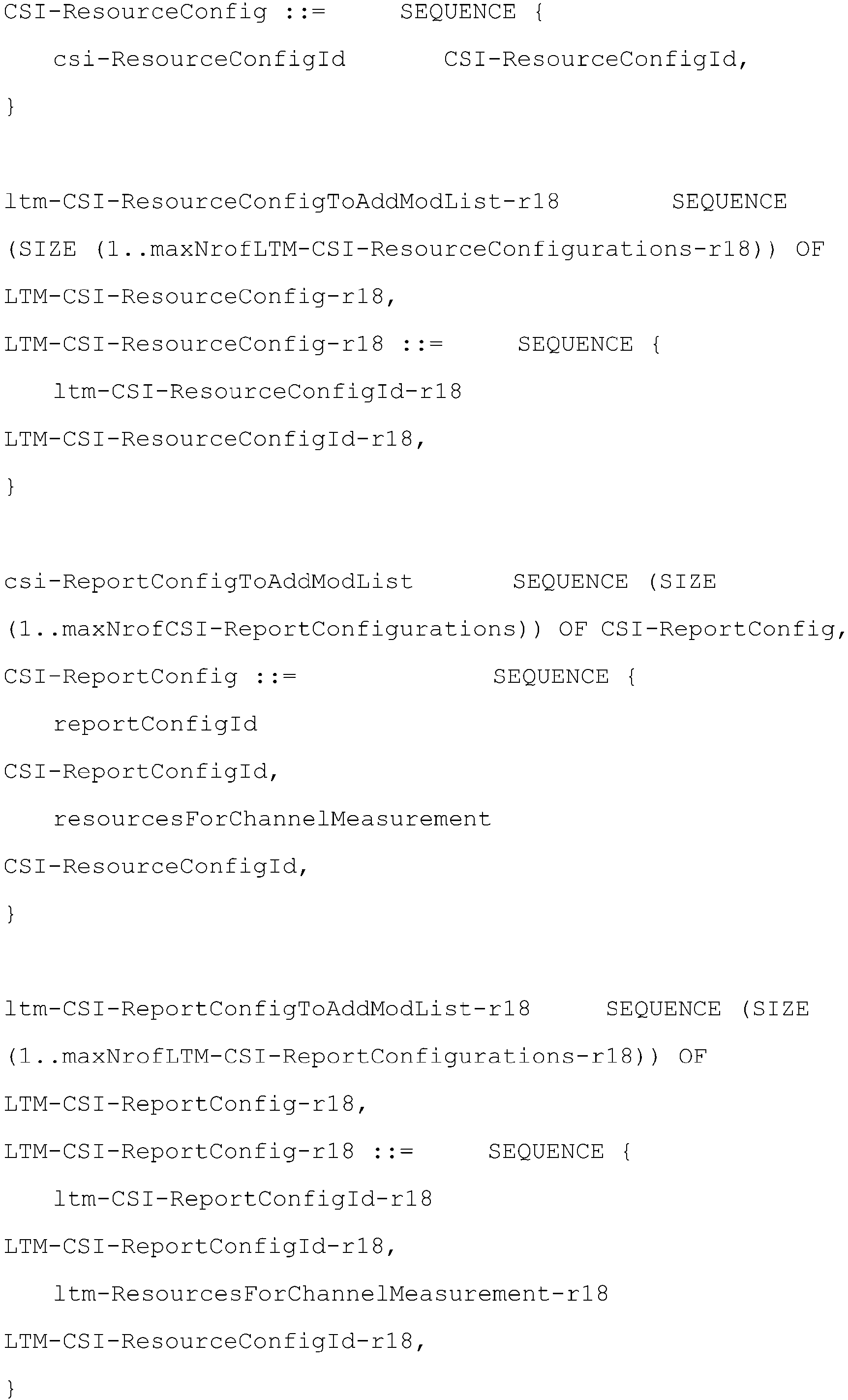

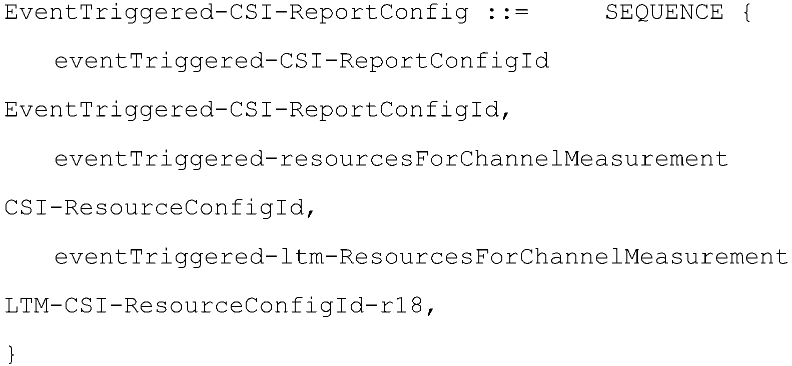

As shown in Example 6, both the event-triggered CSI report configuration and the event-triggered LTM CSI report configuration are configured via EventTriggered-CSI-ReportConfig.

In some embodiments, the event-triggered CSI resource configuration and the event-triggered LTM CSI resource configuration are not configured simultaneously. For example, in EventTriggered-CSI-ReportConfig, eventTriggered-resourcesForChannelMeasurement is configured, or, eventTriggered-ltm-ResourcesForChannelMeasurement is configured.

Following is another example (Example 7) of EventTriggered-CSI-ReportConfig:

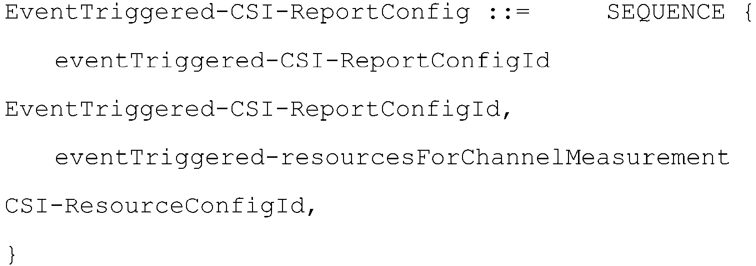

As shown in Example 7, in EventTriggered-CSI-ReportConfig, eventTriggered-resourcesForChannelMeasurement is configured. EventTriggered-CSI-ReportConfig is associated with CSI-ResourceConfig via CSI-ResourceConfigId.

Following is a further example (Example 8) of EventTriggered-CSI-ReportConfig:

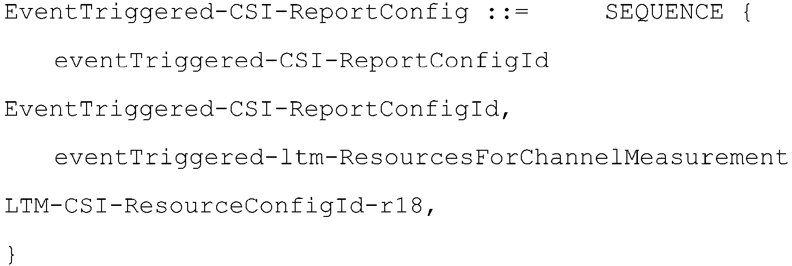

As shown in Example 8, in EventTriggered-CSI-ReportConfig, eventTriggered-ltm-ResourcesForChannelMeasurement is configured. EventTriggered-CSI-ReportConfig is associated with LTM-CSI-ResourceConfig-r18 via LTM-CSI-ResourceConfigId-r18.

According to Example 7 and Example 8, according to types of associated resource configurations, EventTriggered-CSI-ReportConfig associated with CSI-ResourceConfig is an event-triggered CSI report configuration, and EventTriggered-CSI-ReportConfig associated with LTM-CSI-ResourceConfig-r18 is an event-triggered LTM CSI report configuration. According to types of associated resource reports, CSI-ResourceConfig associated with EventTriggered-CSI-ReportConfig is an event-triggered CSI resource configuration, and CSI-ResourceConfig associated with CSI-ReportConfig is a CSI resource configuration. Similarly, LTM-CSI-ResourceConfig-r18 associated with EventTriggered-CSI-ReportConfig is an event-triggered LTM CSI resource configuration, and LTM-CSI-ResourceConfig-rl8 associated with LTM-CSI-ReportConfig-r18 is an LTM CSI resource configuration.

The same manner may be extended to combinations of other resource configurations and report configurations, which shall not be enumerated herein any further.

According to the above examples, for the case where the type of the resource configuration is determined according to a type of a report configuration associated therewith, a resource configuration with which the event-triggered LTM CSI report configuration is associated is an event-triggered LTM CSI resource configuration, and/or, a resource configuration with which the CSI report configuration is associated is a CSI resource configuration, and/or, a resource configuration with which the LTM CSI report configuration is associated is an LTM CSI resource configuration.

Similarly, for the case where the type of the report configuration is determined according to a type of a resource configuration associated therewith, a resource configuration with which the event-triggered CSI report configuration is associated is an event-triggered CSI report configuration, and/or, a resource configuration with which the event-triggered LTM CSI resource configuration is associated is an event-triggered LTM CSI report configuration, and/or, a report configuration with which the CSI resource configuration is associated is a CSI report configuration, and/or, a report configuration with which the LTM CSI resource configuration is associated is an LTM CSI report configuration.

In some embodiments, the type of the report configuration is determined according to a child RRC IE of the report configuration, and/or the type of the resource configuration is determined according to a child RRC IE of the resource configuration. The type of the report configuration includes at least one of the event-triggered CSI report configuration, the event-triggered LTM CSI report configuration, the CSI report configuration and the LTM CSI report configuration, and the type of the resource configuration includes at least one of the event-triggered CSI resource configuration, the event-triggered LTM CSI resource configuration, the CSI resource configuration and the LTM CSI resource configuration.

For example, the type of the report configuration is determined according to a child RRC IE of the RRC IE in the report configuration, the child RRC IE indicating the type of the report configuration. The same manner may be extended to the resource configuration.

In some embodiments, that the type of the report configuration is determined according to a child RRC IE in the report configuration includes that: the child RRC IE as reportConfigType, reportConfigType of the event-triggered CSI report configuration is configured as eventTriggered, reportConfigType of the CSI report configuration is configured as periodic or semiPersistentOnPUCCH or semiPersistentOnPUCCH or aperiodic; and/or, reportConfigType of the event-triggered LTM CSI report configuration is configured as eventTriggered, and the LTM CSI report configuration is configured as periodic or semiPersistentOnPUCCH or semiPersistentOnPUCCH or aperiodic.

For example, as shown in the left of FIG. 5, the event-triggered CSI report configuration and the CSI report configuration are numbered together.

Following is an example (Example 9) of a structure of corresponding RRC signaling (RRC IE):

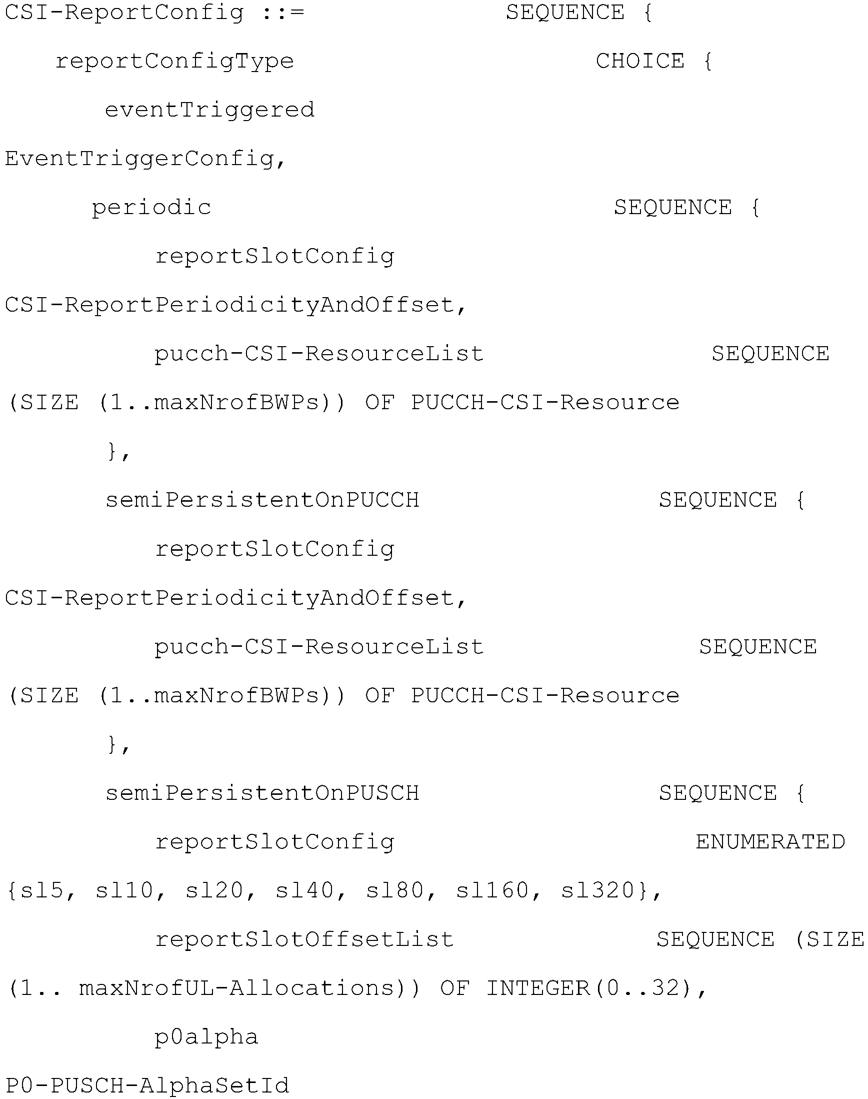

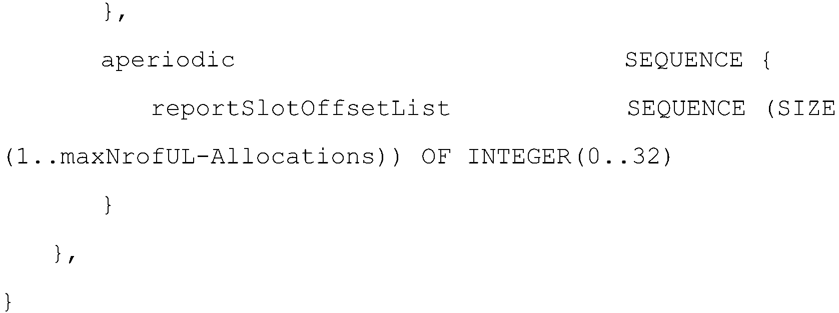

As shown in Example 9, both the event-triggered CSI report configuration and the CSI report configuration are configured via CSI-ReportConfig, when reportConfigType is configured as eventTriggered, CSI-ReportConfig is an event-triggered CSI report configuration, when reportConfigType is configured as periodic or semiPersistentOnPUCCH or semiPersistentOnPUCCH or aperiodic, CSI-ReportConfig is a CSI report configuration, that is, whether CSI-ReportConfig is an event-triggered CSI report configuration or a CSI report configuration is distinguished by reportConfigType. EventTriggerConfig may include a specific configuration of the event-triggered CSI report.

Similarly, as shown in the right of FIG. 5, the event-triggered LTM CSI report configuration and the LTM CSI report configuration are numbered together.

Following is an example (Example 10) of a structure of corresponding RRC signaling (RRC IE):

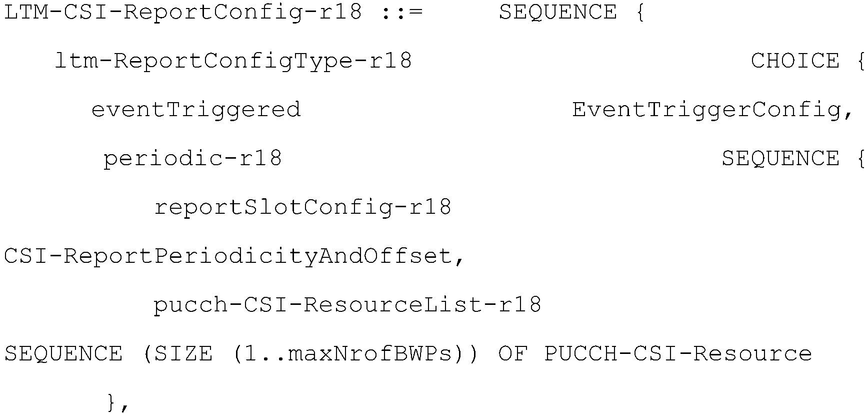

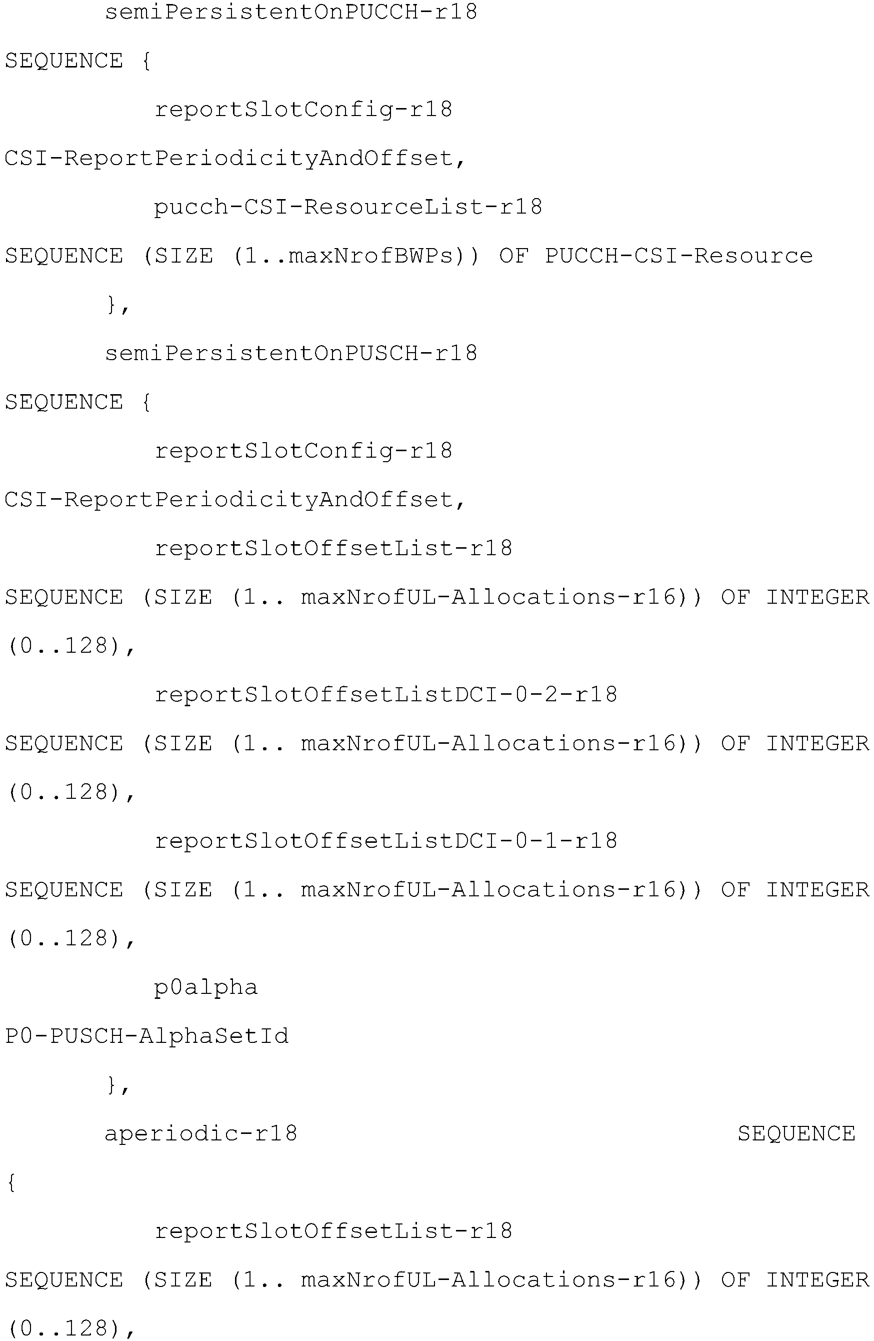

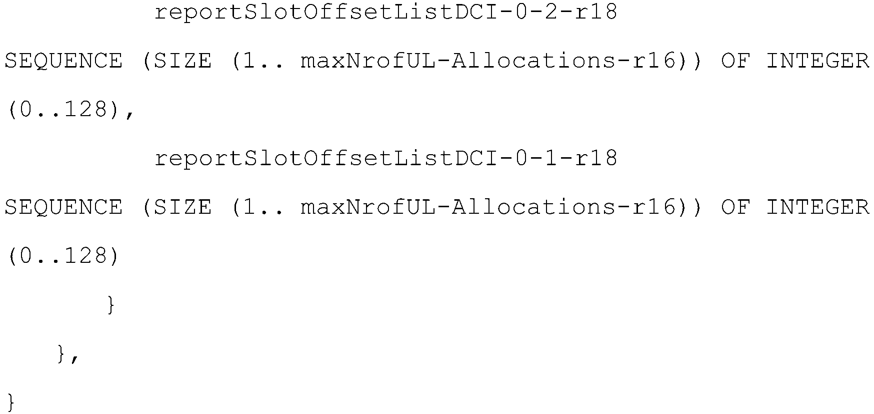

As shown in Example 10, Itm-ReportConfigType is reportConfigType of the event-triggered LTM CSI report configuration or the LTM CSI report configuration.

In some embodiments, the event-triggered CSI resource configuration is configured in CSI-MeasConfig, and/or
the event-triggered LTM CSI resource configuration is configured in LTM-Config-r18, and/or
the event-triggered CSI report configuration is configured in CSI-MeasConfig, and/or
the event-triggered LTM CSI report configuration is configured in CSI-MeasConfig.

For example, as shown in FIG. 3, different types of resource configurations and different types of report configurations are numbered separately.

Following is an example (Example 11) of a structure of corresponding RRC signaling (RRC IE):

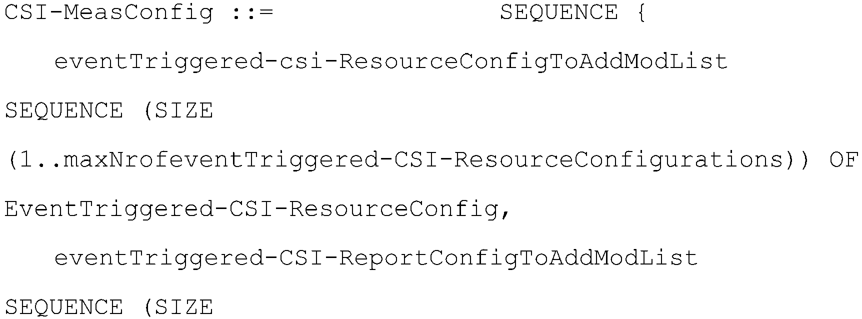

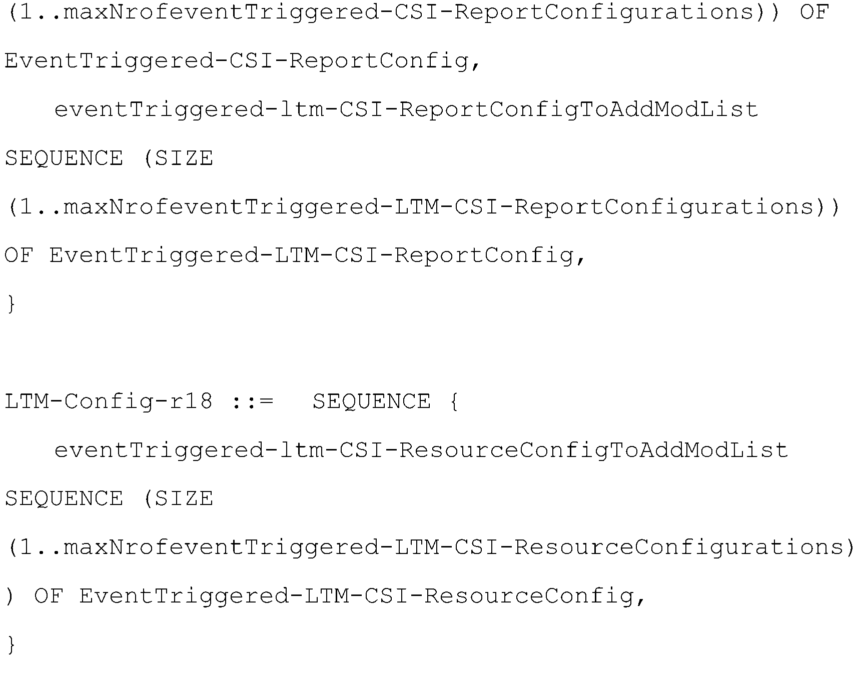

As shown Example 11, the event-triggered CSI resource configuration (EventTriggered-CSI-ResourceConfig) is configured in CSI-MeasConfig, the event-triggered LTM CSI resource configuration (EventTriggered-LTM-CSI-ResourceConfig) is configured in LTM-Config-r18, the event-triggered CSI report configuration (EventTriggered-CSI-ReportConfig) is configured in CSI-MeasConfig, and the event-triggered LTM CSI report configuration (EventTriggered-LTM-CSI-ReportConfig) is configured in CSI-MeasConfig.

In some embodiments, an aperiodic report triggered by a piece of DCI is an event-triggered CSI report or an event-triggered LTM CSI report.

For example, a piece of DCI triggers an aperiodic report, the aperiodic report being one of an event-triggered CSI report, a CSI report, an LTM CSI report and an event-triggered LTM CSI report. In other words, the terminal equipment does not expect that a piece of DCI triggers multiple types of reports. For example, the terminal equipment does not expect that a piece of DCI triggers both an event-triggered CSI report and a CSI report. Thus, triggering different types of reports is independent of each other, which may improve flexibility of configuration and/or triggering. For example, the event-triggered CSI report or the event-triggered LTM CSI report is transmitted in a PUSCH scheduled by the DCI. For example, after an event occurs, the terminal equipment notifies the network device, and the network device schedules the terminal equipment via the DCI to transmit a PUSCH or a PUCCH. The PUSCH or PUCCH may carry the event-triggered CSI report or the event-triggered LTM CSI report, that is, the event-triggered CSI report or the event-triggered LTM CSI report is included in the PUSCH or the PUCCH and transmitted. For example, an aperiodic trigger state is associated with one of an event-triggered CSI report, a CSI report, an LTM CSI report and an event-triggered LTM CSI report.

In some embodiments, in an aperiodic trigger state IE,
a first child IE is associated with a CSI report, and/or,
a second child IE is associated with an event-triggered CSI report, and/or,
a third child IE is associated with an LTM CSI report, and/or,
a fourth child IE is associated with an event-triggered LTM CSI report.

Following is an example (Example 12) of the aperiodic trigger state CSI-AperiodicTriggerState:

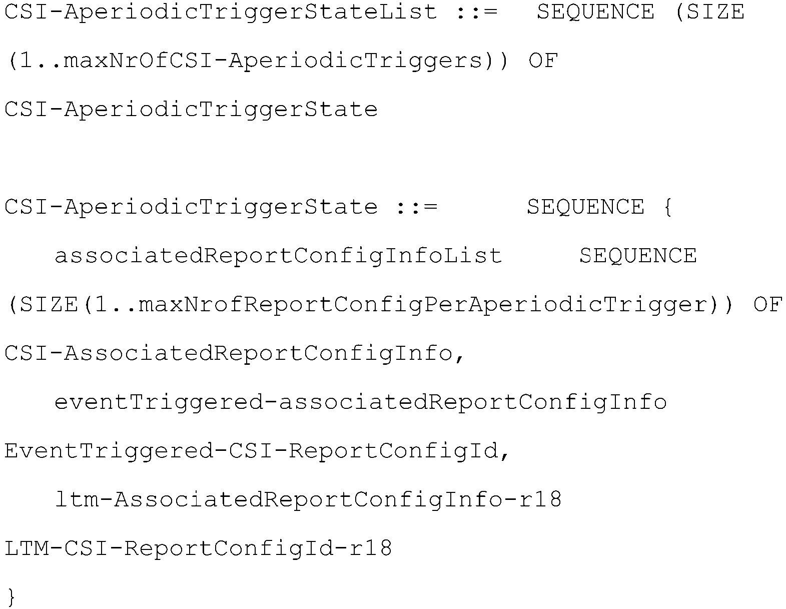

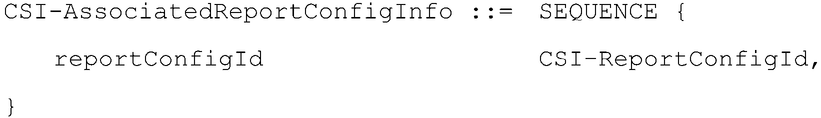

For example, as shown in Example 12, in CSI-AperiodicTriggerState, the CSI report, the event-triggered CSI report and the LTM CSI report correspond respectively to independent RRC IEs, i.e. corresponding respectively to associatedReportConfigInfoList, eventTriggered-associatedReportConfigInfo and ltm-AssociatedReportConfigInfo-r18. A piece of DCI indicates a CSI-AperiodicTriggerState, a CSI-AperiodicTriggerState is associated with one of the event-triggered CSI report (EventTriggered-CSI-ReportConfigId), the CSI report (CSI-ReportConfigId) and the LTM CSI report (LTM-CSI-ReportConfigId-r18). For example, if ltm-AssociatedReportConfigInfo-r18 is configured, the terminal equipment ignores associatedReportConfigInfoList and eventTriggered-associatedReportConfigInfo, and if Itm-AssociatedReportConfigInfo-r18 is not configured and eventTriggered-associatedReportConfigInfo is configured, the terminal equipment ignores associatedReportConfigInfoList. Therefore, a CSI-AperiodicTriggerState is only able to be associated with one of the event-triggered CSI report, the CSI report and the LTM CSI report, and a piece of DCI is only able to trigger one of the event-triggered CSI report, the CSI report and the LTM CSI report. For example, in the case where the event-triggered CSI report and the CSI report are numbered separately, the CSI report, the event-triggered CSI report and the LTM CSI report correspond respectively to associatedReportConfigInfoList, eventTriggered-associatedReportConfigInfo and ltm-AssociatedReportConfigInfo-r18.

In some embodiments, eventTriggered-associatedReportConfiglnfo may be replaced with eventTriggered-associatedReportConfigInfoList, thereby being associated with multiple event-triggered CSI reports.

Following is an example (Example 13) of eventTriggered -associatedReportConfigInfoList:

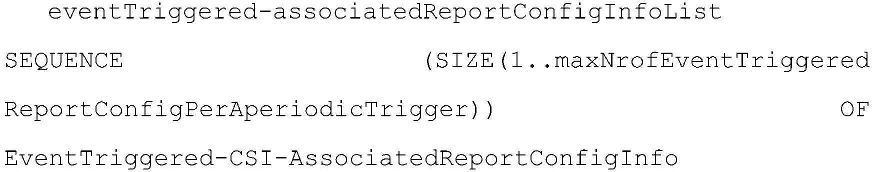

Following is another example (Example 14) of eventTriggered -associatedReportConfigInfoList:

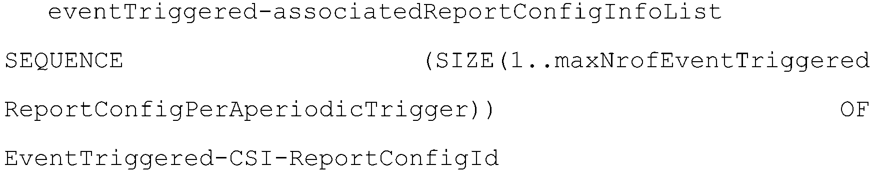

For example, eventTriggered-associatedReportConfigInfo may be replaced with eventTriggered-associatedReportConfigInfoList in Example 13 or Example 14, thereby being associated with multiple event-triggered CSI reports.

In some embodiments, in an aperiodic trigger state IE, a fifth child IE is associated with a CSI report or an event-triggered CSI report, and/or a sixth child IE is associated with an LTM CSI report or an event-triggered LTM CSI report.

Following is an example (Example 15) of CSI-AperiodicTriggerState:

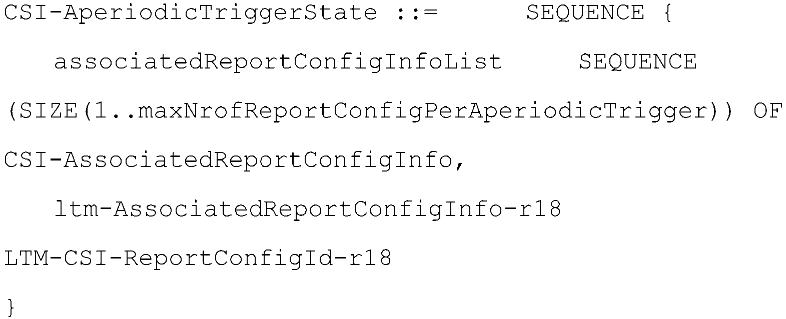

For example, as shown in Example 15, no new RRC IE is defined for the event-triggered CSI report, but certain restrictions are imposed on the RRC configuration, limiting it to CSI-AperiodicTriggerState. Reports in associatedReportConfigInfoList are all event-triggered CSI reports, or are all CSI reports. In other words, the terminal equipment does not expect to be configured with associatedReportConfigInfoList simultaneously including an event-triggered CSI report and a CSI report. Any one of the methods described above may be used to determine whether a report in associatedReportConfigInfoList is an event-triggered CSI report or a CSI report.

For example, when ltm-AssociatedReportConfigInfo-r18 is configured, the terminal equipment ignores associatedReportConfigInfoList. For example, in the case where the event-triggered CSI report and the CSI report are numbered together, the reports in associatedReportConfigInfoList are all event-triggered CSI reports or are all CSI reports.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of a second aspect

The embodiments of this disclosure provide a configuration method. This method is applicable to a network device, and corresponds to the channel state information reporting method applicable to a terminal equipment described in the embodiment of the first aspect, and reference may be made to the disclosure contained in the embodiment of the first aspect for identical or corresponding parts.

This method is applicable to a network device, such as the network device 101 in FIG. 1.

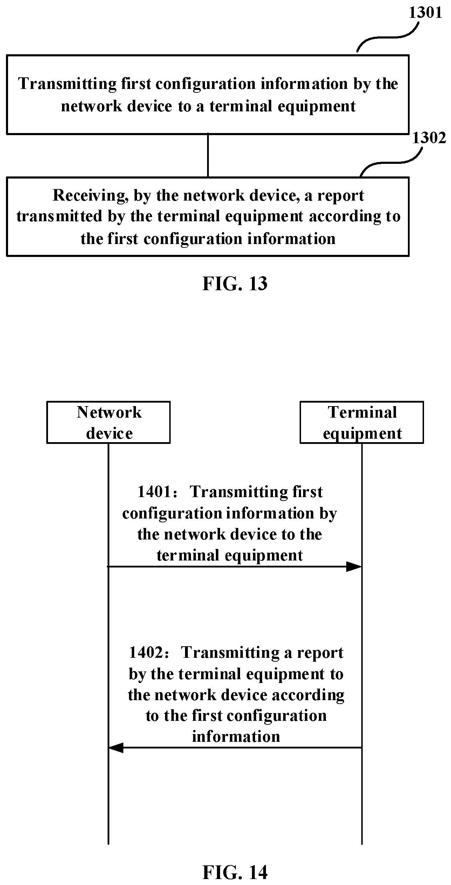

FIG. 13 is a schematic diagram of the configuration method of the embodiments of this disclosure. As shown in FIG. 13, the method includes:
1301: transmitting first configuration information by the network device to a terminal equipment; and
1302: receiving, by the network device, a report transmitted by the terminal equipment according to the first configuration information.

The first configuration information includes at least one of the following configuration information:
an event-triggered CSI resource configuration;
an event-triggered CSI report configuration;
an event-triggered LTM CSI resource configuration; or
an event-triggered LTM CSI report configuration.

In some embodiments, an ID of the event-triggered CSI report configuration is determined in at least one of the following manners that:
the event-triggered CSI report configuration and a CSI report configuration are numbered separately;
the event-triggered CSI report configuration and the CSI report configuration are numbered together;
the event-triggered CSI report configuration and the event-triggered LTM CSI report configuration are numbered separately;
the event-triggered CSI report configuration and the event-triggered LTM CSI report configuration are numbered together; or
the event-triggered CSI report configuration and an LTM CSI report configuration are numbered separately.

In some embodiments, an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

In some embodiments, an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

In some embodiments, the first configuration information further includes at least one of the following configuration information:
a CSI resource configuration;
a CSI report configuration;
an LTM CSI resource configuration; or
an LTM CSI report configuration.

In the embodiments of this disclosure, reference may be made to the disclosure contained in the embodiment of the first aspect for implementations of operations 1301 and 1302, which shall not be repeated herein any further.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of a third aspect

The embodiments of this disclosure provide a channel state information reporting method, applicable to a terminal equipment and a network device, such as the terminal equipment 102 and the network device 101 in FIG. 1. This method corresponds to the channel state information reporting method described in the embodiment of the first aspect and the configuration method described in the embodiment of the second aspect, with identical parts being not going to be described herein any further.

FIG. 14 is an interaction graph of the channel state information reporting method of the embodiments of this disclosure, applicable to a terminal equipment and a network device. As shown in FIG. 14, the method includes:
1401: transmitting first configuration information by the network device to the terminal equipment; and
1402: transmitting a report by the terminal equipment to the network device according to the first configuration information.

The first configuration information includes at least one of the following configuration information:
an event-triggered CSI resource configuration;
an event-triggered CSI report configuration;
an event-triggered LTM CSI resource configuration; or
an event-triggered LTM CSI report configuration,
an ID of the event-triggered CSI report configuration being determined in at least one of the following manners that:
   the event-triggered CSI report configuration and a CSI report configuration are numbered separately;
   the event-triggered CSI report configuration and the CSI report configuration are numbered together;
   the event-triggered CSI report configuration and the event-triggered LTM CSI report configuration are numbered separately;
   the event-triggered CSI report configuration and the event-triggered LTM CSI report configuration are numbered together; or
   the event-triggered CSI report configuration and an LTM CSI report configuration are numbered separately.

In some embodiments, an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

In some embodiments, an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

In some embodiments, an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

In some embodiments, the first configuration information further includes at least one of the following configuration information:
a CSI resource configuration;
a CSI report configuration;
an LTM CSI resource configuration; or
an LTM CSI report configuration.

In the embodiments of this disclosure, reference may be made to the disclosure contained in the embodiment of the first aspect for implementations of operations 1401 and 1402, which shall not be repeated herein any further.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of a fourth aspect

The embodiments of this disclosure provide a channel state information reporting apparatus, provided in a terminal equipment. As a principle of the apparatus for solving problems is similar to that of the method in the embodiment of the first aspect, reference may be made to the implementation of the method described in embodiment of the first aspect for implementation of the apparatus, with identical or related contents being not going to be described herein any further.

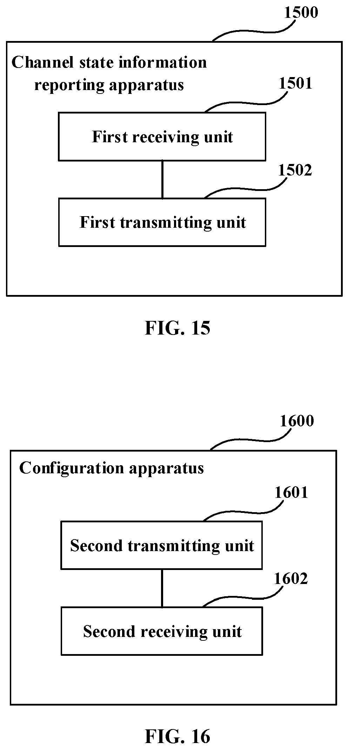

FIG. 15 is a schematic diagram of the channel state information reporting apparatus of the embodiments of this disclosure. As shown in FIG. 15, an apparatus 1500 includes:
a first receiving unit 1501 configured to receive first configuration information; and
a first transmitting unit 1502 configured to transmit a report according to the first configuration information,
the first configuration information including at least one of the following configuration information:
   an event-triggered CSI resource configuration;
   an event-triggered CSI report configuration;
   an event-triggered LTM CSI resource configuration; or
   an event-triggered LTM CSI report configuration;
   an ID of the event-triggered CSI report configuration being determined in at least one of the following manners that:
      the event-triggered CSI report configuration and a CSI report configuration are numbered separately;
      the event-triggered CSI report configuration and the CSI report configuration are numbered together;
      the event-triggered CSI report configuration and the event-triggered LTM CSI report configuration are numbered separately;
      the event-triggered CSI report configuration and the event-triggered LTM CSI report configuration are numbered together; or
      the event-triggered CSI report configuration and an LTM CSI report configuration are numbered separately.

In some embodiments, the first configuration information further includes at least one of the following configuration information:
a CSI resource configuration;
a CSI report configuration;
an LTM CSI resource configuration; or
an LTM CSI report configuration.

In some embodiments, an ID of the event-triggered LTM CSI report configuration is determined in at least one of the following manners that:
the event-triggered LTM CSI report configuration and the LTM CSI report configuration are numbered separately;
the event-triggered LTM CSI report configuration and the LTM CSI report configuration are numbered together;
the event-triggered LTM CSI report configuration and the event-triggered CSI report configuration are numbered separately;
the event-triggered LTM CSI report configuration and the event-triggered CSI report configuration are numbered together; or
the event-triggered LTM CSI report configuration and the CSI report configuration are numbered separately.

In some embodiments, an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

In some embodiments, an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

In some embodiments, a numbering together includes: configuring via an identical RRC IE,
and a numbering separately includes: configuring via different RRC IEs.

In some embodiments, the event-triggered CSI report configuration is associated with the event-triggered CSI resource configuration, and/or,
the event-triggered LTM CSI report configuration is associated with the event-triggered LTM CSI resource configuration.

In some embodiments, an event-triggered CSI report configuration is associated with a number of an event-triggered CSI report configuration and a number/numbers of one or more event-triggered CSI resource configurations, and/or,
an event-triggered LTM CSI report configuration is associated with a number of an event-triggered LTM CSI report configuration and a number/numbers of one or more event-triggered LTM CSI resource configurations.

In some embodiments, a type of the resource configuration is determined according to a type of a report configuration with which the resource configuration is associated, and/or, the type of the report configuration is determined according to the type of the resource configuration with which the report configuration is associated,
the type of the report configuration comprises at least one of the event-triggered CSI report configuration, the event-triggered LTM CSI report configuration, the CSI report configuration or the LTM CSI report configuration,
and the type of the resource configuration includes at least one of the event-triggered CSI resource configuration, the event-triggered LTM CSI resource configuration, the CSI resource configuration or the LTM CSI resource configuration.

In some embodiments, a resource configuration with which the event-triggered CSI report configuration is associated is the event-triggered CSI resource configuration, and/or,
a resource configuration with which the event-triggered LTM CSI report configuration is associated is the event-triggered LTM CSI resource configuration, and/or,
a resource configuration with which the CSI report configuration is associated is the CSI resource configuration, and/or,
a resource configuration with which the LTM CSI report configuration is associated is the LTM CSI resource configuration.

In some embodiments, a report configuration with which the event-triggered CSI report configuration is associated is the event-triggered CSI report configuration, and/or,
a report configuration with which the event-triggered LTM CSI report configuration is associated is the event-triggered LTM CSI resource configuration, and/or,
a report configuration with which the CSI report configuration is associated is the CSI report configuration, and/or,
a report configuration with which the LTM CSI report configuration is associated is the LTM CSI report configuration.

In some embodiments, the type of the report configuration is determined according to a child RRC IE of the report configuration, and/or the type of the resource configuration is determined according to a child RRC IE of the resource configuration,
the type of the report configuration comprises at least one of the event-triggered CSI report configuration, the event-triggered LTM CSI report configuration, the CSI report configuration or the LTM CSI report configuration,
and the type of the resource configuration comprises at least one of the event-triggered CSI resource configuration, the event-triggered LTM CSI resource configuration, the CSI resource configuration or the LTM CSI resource configuration.

In some embodiments, that the type of the report configuration is determined according to a child RRC IE of the report configuration includes:
the child RRC IE is reportConfigType,
reportConfigType of the event-triggered CSI report configuration is configured as eventTriggered, and reportConfigType of the CSI report configuration is configured as periodic, or semiPersistentOnPUCCH, or semiPersistentOnPUCCH, or aperiodic;
   and/or,
reportConfigType of the event-triggered LTM CSI report configuration is configured as eventTriggered, and reportConfigType of the LTM CSI report configuration is configured as periodic, or semiPersistentOnPUCCH, or semiPersistentOnPUCCH, or aperiodic.

In some embodiments, the event-triggered CSI resource configuration is configured in CSI-MeasConfig, and/or,
the event-triggered LTM CSI resource configuration is configured in LTM-Configuraon-r18, and/or,
the event-triggered CSI report configuration is configured in CSI-MeasConfig, and/or,
the event-triggered LTM CSI report configuration is configured in CSI-MeasConfig.

In some embodiments, an aperiodic report triggered by DCI is an event-triggered CSI report or an event-triggered LTM CSI report.

In some embodiments, in an aperiodic triggering state IE,
a first child IE is associated with a CSI report, and/or,
a second child IE is associated with an event-triggered CSI report, and/or,
a third child IE is associated with an LTM CSI report, and/or,
a fourth child IE is associated with an event-triggered LTM CSI report.

In some embodiments, in an aperiodic triggering state IE,
a fifth child IE is associated with the CSI report or the event-triggered CSI report, and/or, a sixth child IE is associated with the LTM CSI report or the event-triggered LTM CSI report.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of a fifth aspect

The embodiments of this disclosure provide a configuration apparatus, applicable to a network device. As a principle of the apparatus for solving problems is similar to that of the method in the embodiment of the second aspect, reference may be made to the implementation of the method described in embodiment of the second aspect for implementation of the apparatus, with identical or related contents being not going to be described herein any further.

FIG. 16 is a schematic diagram of the configuration apparatus of the embodiments of this disclosure. As shown in FIG. 16, an apparatus 1600 includes:
a second transmitting unit 1601 configured to transmit first configuration information to a terminal equipment; and
a second receiving unit 1602 configured to receive a report transmitted by the terminal equipment according to the first configuration information,
the first configuration information including at least one of the following configuration information:
   an event-triggered CSI resource configuration;
   an event-triggered CSI report configuration;
   an event-triggered LTM CSI resource configuration; or
   an event-triggered LTM CSI report configuration;
   an ID of the event-triggered CSI report configuration being determined in at least one of the following manners that:
      the event-triggered CSI report configuration and a CSI report configuration are numbered separately;
      the event-triggered CSI report configuration and the CSI report configuration are numbered together;
      the event-triggered CSI report configuration and the event-triggered LTM CSI report configuration are numbered separately;
      the event-triggered CSI report configuration and the event-triggered LTM CSI report configuration are numbered together; or
      the event-triggered CSI report configuration and an LTM CSI report configuration are numbered separately.

In some embodiments, an ID of the event-triggered LTM CSI report configuration is determined in at least one of the following manners that:
the event-triggered LTM CSI report configuration and the LTM CSI report configuration are numbered separately;
the event-triggered LTM CSI report configuration and the LTM CSI report configuration are numbered together;
the event-triggered LTM CSI report configuration and the event-triggered CSI report configuration are numbered separately;
the event-triggered LTM CSI report configuration and the event-triggered CSI report configuration are numbered together; or
the event-triggered LTM CSI report configuration and the CSI report configuration are numbered separately.

In some embodiments, an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

In some embodiments, an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

In some embodiments, the first configuration information further includes at least one of the following configuration information:
a CSI resource configuration;
a CSI report configuration;
an LTM CSI resource configuration; or
an LTM CSI report configuration.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of a sixth aspect

The embodiments of this disclosure provide a terminal equipment, including the channel state information reporting apparatus described in the embodiment of the fourth aspect.

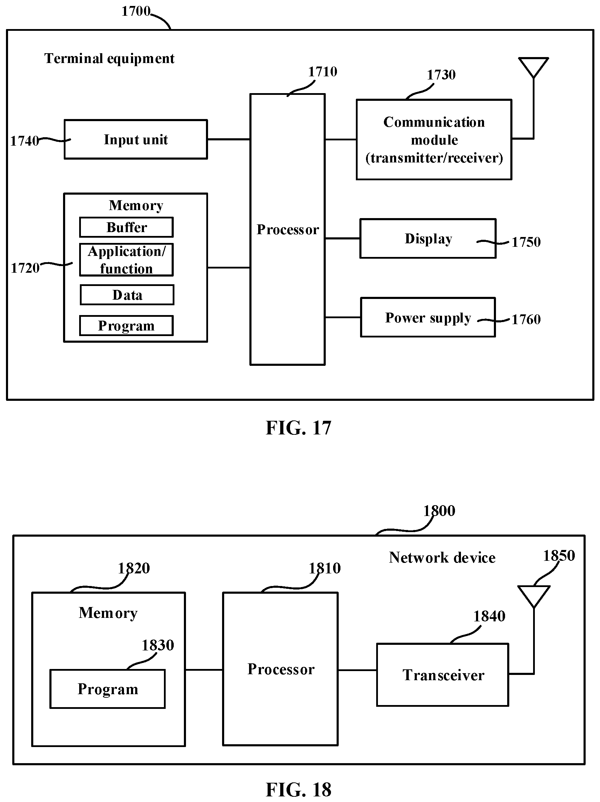

FIG. 17 is a block diagram of a systematic structure of the terminal equipment of the embodiments of this disclosure. As shown in FIG. 17, a terminal equipment 1700 may include a processor 1710 and a memory 1720, the memory 1720 being coupled to the processor 1710. It should be noted that this figure is illustrative only, and other types of structures may also be used, so as to supplement or replace this structure and achieve a telecommunications function or other functions.

In one implementation, the functions of the channel state information reporting apparatus may be integrated into the processor 1710.

The processor 1701 may be configured to: receive first configuration information; and transmit a report according to the first configuration information,
the first configuration information including at least one of the following configuration information:
an event-triggered CSI resource configuration;
an event-triggered CSI report configuration;
an event-triggered LTM CSI resource configuration; or
an event-triggered LTM CSI report configuration;
an ID of the event-triggered CSI report configuration being determined in at least one of the following manners that:
   the event-triggered CSI report configuration and a CSI report configuration are numbered separately;
   the event-triggered CSI report configuration and the CSI report configuration are numbered together;
   the event-triggered CSI report configuration and the event-triggered LTM CSI report configuration are numbered separately;
   the event-triggered CSI report configuration and the event-triggered LTM CSI report configuration are numbered together; or
   the event-triggered CSI report configuration and an LTM CSI report configuration are numbered separately.

In another implementation, the channel state information reporting apparatus and the processor 1710 may be configured separately; for example, the channel state information reporting apparatus may be configured as a chip connected to the processor 1710, and the functions of the channel state information reporting apparatus are executed under control of the processor 1710.

As shown in FIG. 17, the terminal equipment 1700 may further include a communication module 1730, an input unit 1740, a display 1750, and a power supply 1760. It should be noted that the terminal equipment 1700 does not necessarily include all the parts shown in FIG. 17, and the above components are not necessary. Furthermore, the terminal equipment 1700 may include parts not shown in FIG. 17, and the related art may be referred to.

As shown in FIG. 17, the processor 1710 is sometimes referred to as a controller or an operational control, which may include a microprocessor or other processor devices and/or logic devices. The processor 1710 receives input and controls operations of components of the terminal equipment 1700.

In some embodiments, the memory 1720 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1710 may execute programs stored in the memory 1720, so as to realize information storage or processing, etc. Functions of other parts are similar to those of the related art, which shall not be described herein any further.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of a seventh aspect

The embodiments of this disclosure provide a network device, including the configuration apparatus described in the embodiment of the fifth aspect.

FIG. 18 is a schematic diagram of a systematic structure of the network device of the embodiments of this disclosure. As shown in FIG. 18, a network device 1800 may include a processor 1810 and a memory 1820, the memory 1820 being coupled to the processor 1810. Wherein, the memory 1820 may store various data, and furthermore, it may store a program 1830 for data processing, and execute the program 1830 under control of the processor 1810, so as to receive various information transmitted by a terminal equipment, and transmit various information to the terminal equipment.

In one implementation, the functions of the configuration apparatus may be integrated into the processor 1810.

The processor 1810 may be configured to: transmit first configuration information to a terminal equipment; and receive a report transmitted by the terminal equipment according to the first configuration information,
the first configuration information including at least one of the following configuration information:
an event-triggered CSI resource configuration;
an event-triggered CSI report configuration;
an event-triggered LTM CSI resource configuration; or
an event-triggered LTM CSI report configuration;
an ID of the event-triggered CSI report configuration being determined in at least one of the following manners that:
   the event-triggered CSI report configuration and a CSI report configuration are numbered separately;
   the event-triggered CSI report configuration and the CSI report configuration are numbered together;
   the event-triggered CSI report configuration and the event-triggered LTM CSI report configuration are numbered separately;
   the event-triggered CSI report configuration and the event-triggered LTM CSI report configuration are numbered together; or
   the event-triggered CSI report configuration and an LTM CSI report configuration are numbered separately.

In another implementation, the configuration apparatus and the processor 1810 may be configured separately; for example, the configuration apparatus may be configured as a chip connected to the processor 1810, and the functions of the configuration apparatus are executed under control of the processor 1810.

Furthermore, as shown in FIG. 18, the network device 1800 may include a transceiver 1840, and an antenna 1850, etc. Wherein, functions of the above components are similar to those in the related art, and shall not be described herein any further. It should be noted that the network device 1800 does not necessarily include all the parts shown in FIG. 18. Furthermore, the network device 1800 may include parts not shown in FIG. 18, and the related art may be referred to.

It can be seen from the above embodiment that a group of event-triggered report configurations may be configured as a subset of a group of legacy report configurations or may be configured separately from a group of legacy report configurations, and furthermore, event-triggered resources may also be configured in a similar manner. Hence, device complexities may be lowered or configuration flexibility may be improved, thereby lowering reporting overhead and improving timeliness of reporting by the event-triggered reports.

### Embodiment of an eighth aspect

The embodiments of this disclosure provide a communication system, including the terminal equipment described in the embodiment of the sixth aspect and/or the network device described in the embodiment of the seventh aspect, and reference may be made to the embodiment of the sixth aspect and the embodiment of the seventh aspect for specific contents.

For example, reference may be made to FIG. 1 for a structure of the communication system. As shown in FIG. 1, the communication system 100 includes the network device 101 and the terminal equipment 102. The terminal equipment 102 may be identical to the terminal equipment described in the embodiment of the sixth aspect, and/or, the network device 101 may be identical to the network device described in the embodiment of the seventh aspect, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 15 may either correspond to software modules of procedures of a computer program, or correspond to hardware modules. Such software modules may respectively correspond to the steps shown in FIG. 2. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 15 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 15 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A channel state information (CSI) reporting apparatus, provided in a terminal equipment, the apparatus comprising:
a first receiving unit configured to receive first configuration information; and
a first transmitting unit configured to transmit a report according to the first configuration information,
the first configuration information comprising at least one of the following configuration information:
an event-triggered CSI resource configuration;
an event-triggered CSI report configuration;
an event-triggered LTMCSI resource configuration; or
an event-triggered LTM CSI report configuration;
an ID of the event-triggered CSI report configuration being determined in at least one of the following manners that:
the event-triggered CSI report configuration and a CSI report configuration are numbered separately;
the event-triggered CSI report configuration and the CSI report configuration are numbered together;
the event-triggered CSI report configuration and the event-triggered LTM CSI report configuration are numbered separately;
the event-triggered CSI report configuration and the event-triggered LTM CSI report configuration are numbered together; or
the event-triggered CSI report configuration and an LTM CSI report configuration are numbered separately.

2. The apparatus according to claim 1, wherein,
the first configuration information further comprises at least one of the following configuration information:
a CSI resource configuration;
a CSI report configuration;
an LTM CSI resource configuration; or
an LTM CSI report configuration.

3. The apparatus according to claim 1, wherein an ID of the event-triggered LTM CSI report configuration is determined in at least one of the following manners that:
the event-triggered LTM CSI report configuration and the LTM CSI report configuration are numbered separately;
the event-triggered LTM CSI report configuration and the LTM CSI report configuration are numbered together;
the event-triggered LTM CSI report configuration and the event-triggered CSI report configuration are numbered separately;
the event-triggered LTM CSI report configuration and the event-triggered CSI report configuration are numbered together; or
the event-triggered LTM CSI report configuration and the CSI report configuration are numbered separately.

4. The apparatus according to claim 1, wherein an ID of the event-triggered CSI resource configuration is determined in at least one of the following manners that:
the event-triggered CSI resource configuration and the CSI resource configuration are numbered separately;
the event-triggered CSI resource configuration and the CSI resource configuration are numbered together;
the event-triggered CSI resource configuration and the event-triggered LTM CSI resource configuration are numbered separately;
the event-triggered CSI resource configuration and the event-triggered LTM CSI resource configuration are numbered together; or
the event-triggered CSI resource configuration and the LTM CSI resource configuration are numbered separately.

5. The apparatus according to claim 1, wherein an ID of the event-triggered LTM CSI resource configuration is determined in at least one of the following manners that:
the event-triggered LTM CSI resource configuration and the LTM CSI resource configuration are numbered separately;
the event-triggered LTM CSI resource configuration and the LTM CSI resource configuration are numbered together;
the event-triggered LTM CSI resource configuration and the event-triggered CSI resource configuration are numbered separately;
the event-triggered LTM CSI resource configuration and the event-triggered CSI resource configuration are numbered together; or
the event-triggered LTM CSI resource configuration and the CSI resource configuration are numbered separately.

6. The apparatus according to any one of claims 1-5, wherein,
a numbering together comprises: configuring via an identical RRC IE,
and a numbering separately comprises: configuring via different RRC IEs.

7. The apparatus according to claim 1, wherein,
the event-triggered CSI report configuration is associated with the event-triggered CSI resource configuration, and/or,
the event-triggered LTM CSI report configuration is associated with the event-triggered LTM CSI resource configuration.

8. The apparatus according to claim 7, wherein,
an event-triggered CSI report configuration is associated with a number of an event-triggered CSI report configuration and a number/numbers of one or more event-triggered CSI resource configurations, and/or,
an event-triggered LTM CSI report configuration is associated with a number of an event-triggered LTM CSI report configuration and a number/numbers of one or more event-triggered LTM CSI resource configurations.

9. The apparatus according to claim 1, wherein,
a type of a resource configuration is determined according to a type of a report configuration with which the resource configuration is associated, and/or, a type of a report configuration is determined according to a type of a resource configuration with which the report configuration is associated,
the type of the report configuration comprises at least one of the event-triggered CSI report configuration, the event-triggered LTM CSI report configuration, the CSI report configuration or the LTM CSI report configuration,
and the type of the resource configuration comprises at least one of the event-triggered CSI resource configuration, the event-triggered LTM CSI resource configuration, the CSI resource configuration or the LTM CSI resource configuration.

10. The apparatus according to claim 9, wherein,
a resource configuration with which the event-triggered CSI report configuration is associated is the event-triggered CSI resource configuration, and/or,
a resource configuration with which the event-triggered LTM CSI report configuration is associated is the event-triggered LTM CSI resource configuration, and/or,
a resource configuration with which the CSI report configuration is associated is the CSI resource configuration, and/or,
a resource configuration with which the LTM CSI report configuration is associated is the LTM CSI resource configuration.

11. The apparatus according to claim 9, wherein,
a report configuration with which the event-triggered CSI report configuration is associated is the event-triggered CSI report configuration, and/or,
a report configuration with which the event-triggered LTM CSI report configuration is associated is the event-triggered LTM CSI resource configuration, and/or,
a report configuration with which the CSI report configuration is associated is the CSI report configuration, and/or,
a report configuration with which the LTM CSI report configuration is associated is the LTM CSI report configuration.

12. The apparatus according to claim 1, wherein,
a type of a report configuration is determined according to a child RRC IE of the report configuration, and/or a type of a resource configuration is determined according to a child RRC IE of the resource configuration,
the type of the report configuration comprises at least one of the event-triggered CSI report configuration, the event-triggered LTM CSI report configuration, the CSI report configuration or the LTM CSI report configuration,
and the type of the resource configuration comprises at least one of the event-triggered CSI resource configuration, the event-triggered LTM CSI resource configuration, the CSI resource configuration or the LTM CSI resource configuration.

13. The apparatus according to claim 12, wherein,
that the type of the report configuration is determined according to a child RRC IE of the report configuration comprises that:
the child RRC IE is reportConfigType,
reportConfigType of the event-triggered CSI report configuration is configured as eventTriggered, and reportConfigType of the CSI report configuration is configured as periodic, or semiPersistentOnPUCCH, or semiPersistentOnPUCCH, or aperiodic;
and/or,
reportConfigType of the event-triggered LTM CSI report configuration is configured as eventTriggered, and reportConfigType of the LTM CSI report configuration is configured as periodic, or semiPersistentOnPUCCH, or semiPersistentOnPUCCH, or aperiodic.

14. The apparatus according to claim 1, wherein,
the event-triggered CSI resource configuration is configured in CSI-MeasConfig, and/or,
the event-triggered LTM CSI resource configuration is configured in LTM-Configuraon-r18, and/or,
the event-triggered CSI report configuration is configured in CSI-MeasConfig, and/or,
the event-triggered LTM CSI report configuration is configured in CSI-MeasConfig.

15. The apparatus according to claim 1, wherein,
an aperiodic report triggered by DCI is an event-triggered CSI report or an event-triggered LTM CSI report.

16. The apparatus according to claim 15, wherein,
in an aperiodic triggering state IE,
a first child IE is associated with a CSI report, and/or,
a second child IE is associated with an event-triggered CSI report, and/or,
a third child IE is associated with an LTM CSI report, and/or,
a fourth child IE is associated with an event-triggered LTM CSI report.

17. The apparatus according to claim 15, wherein,
in an aperiodic triggering state IE,
a fifth child IE is associated with a CSI report or a event-triggered CSI report, and/or, a sixth child IE is associated with an LTM CSI report or an event-triggered LTM CSI report.

18. A configuration apparatus, provided in a network device, the apparatus comprising:
a second transmitting unit configured to transmit first configuration information to a terminal equipment; and
a second receiving unit configured to receive a report transmitted by the terminal equipment according to the first configuration information,
the first configuration information comprising at least one of the following configuration information:
an event-triggered CSI resource configuration;
an event-triggered CSI report configuration;
an event-triggered LTM CSI resource configuration; or
an event-triggered LTM CSI report configuration;
an ID of the event-triggered CSI report configuration being determined in at least one of the following manners that:
the event-triggered CSI report configuration and a CSI report configuration are numbered separately;
the event-triggered CSI report configuration and the CSI report configuration are numbered together;
the event-triggered CSI report configuration and the event-triggered LTM CSI report configuration are numbered separately;
the event-triggered CSI report configuration and the event-triggered LTM CSI report configuration are numbered together; or
the event-triggered CSI report configuration and an LTM CSI report configuration are numbered separately.

19. The apparatus according to claim 18, wherein,
the first configuration information further comprises at least one of the following configuration information:
a CSI resource configuration;
a CSI report configuration;
an LTM CSI resource configuration; or
an LTM CSI report configuration.

20. A communication system, comprising a network device and/or a terminal equipment,
the terminal equipment comprising the apparatus as claimed in claim 1,
and the network device comprising the apparatus as claimed in claim 18.
